# EUROPEAN PATENT APPLICATION

(11) **EP 4 148 646 A1**
(43) Date of publication of application: **15.03.2023**
(21) Application number: 21905162.0
(22) Date of filing: 16.09.2021
(51) Int. Cl.: G06Q 20/34

(54) **CARD MANAGEMENT METHOD, USER TERMINAL, SERVER, SYSTEM AND STORAGE MEDIUM**

(30) Priority: 15.12.2020 CN 202011469593
(71) Applicant: China Unionpay Co., Ltd., Shanghai 200135 (CN)
(72) Inventor: LIU, Gang, Shanghai 200135 (CN); PENG, Cheng, Shanghai 200135 (CN); SUN, Quan, Shanghai 200135 (CN); ZOU, Zhenzhong, Shanghai 200135 (CN); ZHAN, Chengchu, Shanghai 200135 (CN); CAI, Hua, Shanghai 200135 (CN)
(74) Representative: Grey, Ian Michael
(86) International application number: PCT/CN2021/118800
(87) International publication number: WO 2022/127230

(57) **Abstract**

The present application discloses a card management method, a user terminal, a server, a system and a storage medium, and falls within the field of data processing. A security element of a user terminal stores a first type of universal card instance and a second type of universal card instance, a first matching universal card instance is configured for transaction verification of a binding card, the first matching universal card instance includes a first matching universal card identifier, and the first matching universal card identifier is a first type of universal card identifier or a second type of universal card identifier matching a card type of the binding card. The method includes: sending a card binding message to a server, wherein the card binding message includes a security element identifier and binding card authentication information, so that the server allocates a card transaction identifier for the binding card, and establishes a first mapping relationship; receiving the card transaction identifier of the binding card sent by a server; storing the card transaction identifier of the binding card to the security element. According to the embodiment of the present application, the complexity of a card management process can be reduced.

## Description

### CROSS-REFERENCE TO RELATED APPLICATIONS

This application claims priority to Chinese Patent Application No. 202011469593.8, filed on December 15, 2020 and entitled "Card management method, user terminal, server, system and storage medium", the entire contents of which are incorporated herein by reference.

### TECHNICAL FIELD

The present application belongs to the field of data processing, and in particular, relates to a card management method, a user terminal, a server, a system and a storage medium.

### BACKGROUND

With the continuous development of information technology, a user can complete a payment transaction through a user terminal installed with an application. Before making a payment transaction, the user needs to bind his own card for making a payment transaction, such as a bank card, in the application so that the card can be used in making a payment transaction through the application.

The user can manage cards based on a change of requirements, such as adding a card bound in the application, or deleting a card bound in the application, etc. In order to enable a card to perform a payment transaction, in the case of multiple binding of cards, downloading and storage of program data packages and personalization data corresponding to added bound cards need to be performed frequently, making a card management process more cumbersome.

### SUMMARY

Embodiments of the present application provide a card management method, a user terminal, a server, a system and a storage medium, which can reduce the complexity of a card management process.

In a first aspect, embodiments of the present application provide a card management method applied to a user terminal, wherein the user terminal includes a security element, the security element stores a first type of universal card instance and a second type of universal card instance, the first type of universal card instance includes a first type of universal card identifier and a first type of universal personalization data, the second type of universal card instance includes a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type; the method includes: sending a card binding message to a server, wherein the card binding message includes a security element identifier of the security element and card authentication information of a binding card, so that the server allocates a card transaction identifier for the binding card, and establishes a first mapping relationship, wherein the first mapping relationship includes a mapping relationship of the security element identifier, a first matching universal card identifier and the card transaction identifier of the binding card, and the first matching universal card identifier is the first type of universal card identifier or the second type of universal card identifier matching a card type of the binding card; receiving the card transaction identifier of the binding card sent by the server; and storing the card transaction identifier of the binding card to the security element, wherein a first matching universal card instance is configured for transaction verification of the binding card, the first matching universal card instance includes the first matching universal card identifier, and the first matching universal card instance is the first type of universal card instance or the second type of universal card instance matching the card type of the binding card.

In a second aspect, embodiments of the present application provide a card management method applied to a server, wherein the server stores a first type of universal card instance and a second type of universal card instance of a user terminal, the first type of universal card instance includes a first type of universal card identifier and a first type of universal personalization data, the second type of universal card instance includes a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type; the method includes: receiving a card binding message sent by the user terminal, wherein the card binding message includes a security element identifier and binding card authentication information, and the binding card authentication information includes card authentication information of a binding card; in response to the card binding message, allocating a card transaction identifier for the binding card, and establishing a first mapping relationship, wherein the first mapping relationship includes a mapping relationship of the security element identifier, a first matching universal card identifier and the card transaction identifier of the binding card, the first matching universal card identifier is the first type of universal card identifier or the second type of universal card identifier matching a card type of the binding card, a first matching universal card instance is configured for transaction verification of the binding card, the first matching universal card instance includes the first matching universal card identifier, and the first matching universal card instance is the first type of universal card instance or the second type of universal card instance matching the card type of the binding card; and sending the card transaction identifier of the binding card to the user terminal.

In a third aspect, embodiments of the present application provide a user terminal having a security element, wherein the security element stores a first type of universal card instance and a second type of universal card instance, the first type of universal card instance includes a first type of universal card identifier and a first type of universal personalization data, the second type of universal card instance includes a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type; the user terminal includes: a sending module configured to send a card binding message to a server, wherein the card binding message includes a security element identifier and binding card authentication information including card authentication information of a binding card, so that the server allocates a card transaction identifier for the binding card, and establishes a first mapping relationship, wherein the first mapping relationship includes a mapping relationship of the security element identifier, a first matching universal card identifier and the card transaction identifier of the binding card, the first matching universal card identifier is the first type of universal card identifier or the second type of universal card identifier matching a card type of the binding card, a first matching universal card instance is configured for transaction verification of the binding card, the first matching universal card instance includes the first matching universal card identifier, and the first matching universal card instance is the first type of universal card instance or the second type of universal card instance matching the card type of the binding card; a receiving module configured to receive the card transaction identifier of the binding card sent by the server; and a processing module configured to store the card transaction identifier of the binding card to the security element.

In a fourth aspect, embodiments of the present application provide a server storing a first type of universal card instance and a second type of universal card instance of a user terminal, wherein the first type of universal card instance includes a first type of universal card identifier and a first type of universal personalization data, the second type of universal card instance includes a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type; the server includes: a receiving module configured to receive a card binding message sent by the user terminal, wherein the card binding message includes a security element identifier and binding card authentication information, and the binding card authentication information includes card authentication information of a binding card; a processing module configured to: in response to the card binding message, allocate a card transaction identifier for the binding card, and establish a first mapping relationship, wherein the first mapping relationship includes a mapping relationship of the security element identifier, a first matching universal card identifier and the card transaction identifier of the binding card, the first matching universal card identifier is the first type of universal card identifier or the second type of universal card identifier matching a card type of the binding card, a first matching universal card instance is configured for transaction verification of the binding card, the first matching universal card instance includes the first matching universal card identifier, and the first matching universal card instance is the first type of universal card instance or the second type of universal card instance matching the card type of the binding card; and a sending module configured to send the card transaction identifier of the binding card to the user terminal.

In a fifth aspect, embodiments of the present application provide a user terminal, including: a processor and a memory storing computer program instructions; the processor implements the card management method in the first aspect when executing the computer program instructions.

In a sixth aspect, embodiments of the present application provide a server, including: a processor and a memory storing computer program instructions; the processor implements the card management method in the second aspect when executing the computer program instructions.

In a seventh aspect, embodiments of the present application provide a card management system comprising the user terminal of the fifth aspect and the server of the sixth aspect.

In an eighth aspect, embodiments of the present application provide a computer storage medium having stored thereon computer program instructions that when executed by a processor, implement the card management method in the first aspect or the card management method in the second aspect.

Embodiments of the present application provide a card management method, a user terminal, a server, a system and a storage medium, wherein a first type of universal card instance and a second type of universal card instance are stored in a security element of the user terminal. By sending a card binding message to a server, the user terminal enables the server to allocate a card transaction identifier for a binding card, and establish a mapping relationship of a security element identifier, a first matching universal card identifier and the allocated card transaction identifier. The user terminal itself can use a first matching universal card instance corresponding to the binding card to perform transaction verification, and the server uses the determined first matching universal card instance to perform transaction verification. The first matching universal card instance is the first type of universal card instance or the second type of universal card instance matching a card type of the binding card. That is to say, transaction verification can be completed by using the first type of universal card instance or the second type of universal card instance. In a process of binding cards, the server does not need to allocate corresponding personalization data for each card, and therefore does not need to download personalization data during each card binding process, so as to avoid frequently downloading and storing personalization data, thereby reducing the complexity of the card management process.

### BRIEF DESCRIPTION OF THE DRAWINGS

In order to more clearly illustrate technical solutions of embodiments of the present application, the drawings to be used in the embodiments of the present application will be briefly described. For those skilled in the art, other drawings can also be obtained from these drawings without any inventive effort.
Fig. 1 is a schematic diagram of an example of an application scenario of a card management method provided by an embodiment of the present application;
Fig. 2 is a schematic diagram of an example of contents stored in a security element of a user terminal provided by an embodiment of the present application;
Fig. 3 is a schematic diagram of an example of a mapping relationship stored in a server provided by an embodiment of the present application;
Fig. 4 is a flowchart of an embodiment of a card management method provided in the first aspect of the present application;
Fig. 5 is a flowchart of another embodiment of a card management method provided in the first aspect of the present application;
Fig. 6 is a flowchart of yet another embodiment of a card management method provided in the first aspect of the present application;
Fig. 7 is a flowchart of yet another embodiment of a card management method provided in the first aspect of the present application;
Fig. 8 is a flowchart of yet another embodiment of a card management method provided in the first aspect of the present application;
Fig. 9 is a flowchart of an embodiment of a card management method provided in the second aspect of the present application;
Fig. 10 is a flowchart of another embodiment of a card management method provided in the second aspect of the present application;
Fig. 11 is a flowchart of yet another embodiment of a card management method provided in the second aspect of the present application;
Fig. 12 is a flowchart of yet another embodiment of a card management method provided in the second aspect of the present application;
Fig. 13 is a flowchart of yet another embodiment of a card management method provided in the second aspect of the present application;
Fig. 14 is a flowchart of an example of an initialization process provided by an embodiment of the present application;
Fig. 15 is a flowchart of an example of a card binding process provided by an embodiment of the present application;
Fig. 16 is a flowchart of an example of a card deletion process provided by an embodiment of the present application;
Fig. 17 is a flowchart of another example of a card deletion process provided by an embodiment of the present application;
Fig. 18 is a schematic structural diagram of an embodiment of a user terminal provided in the third aspect of the present application;
Fig. 19 is a schematic structural diagram of another embodiment of a user terminal provided in the third aspect of the present application;
Fig. 20 is a schematic structural diagram of an embodiment of a server provided in the fourth aspect of the present application;
Fig. 21 is a schematic structural diagram of another embodiment of a server provided in the fourth aspect of the present application;
Fig. 22 is a schematic structural diagram of an embodiment of a user terminal provided in the fifth aspect of the present application;
Fig. 23 is a schematic structural diagram of an embodiment of a server provided in the sixth aspect of the present application.

### DETAILED DESCRIPTION

Features and exemplary embodiments of various aspects of the present application will be described in detail below. In order to make the objects, technical solutions and advantages of the present application clearer, the present application is further described in detail below with reference to the drawings and specific embodiments. It should be understood, that the specific embodiments described herein are only intended to explain the present application, but not to limit the present application. For those skilled in the art, the present application may be implemented without some of these specific details. The following description of the embodiments is merely to provide a better understanding of the present application by illustrating examples of the present application.

With the continuous development of information technology, a user can complete a payment transaction through an application installed in a user terminal. The application may be bound with a user's card, such as a bank card, etc., and in the process of a payment transaction, resources in the process of the payment transaction are transferred from a card bound in the application. During a payment transaction using each card, transaction verification is required. In order to enable transaction verification, a corresponding program data package and personalization data are allocated to each card and stored in the user terminal. Each time a card is bound, the user terminal needs to download and store the program data package and personalization data allocated for the card. Under a condition that the application binds multiple cards, the user terminal needs to download and store program data packages and personalization data corresponding to the cards multiple times. Under a condition that an application deletes a card, the user terminal needs to delete the program data package and personalization data corresponding to the card. Frequent downloading and deleting of program data packages and personalization data makes the card management process more cumbersome. Especially in the case where the user rebinds a deleted card, the user terminal needs to redownload the program data package and personalization data corresponding to the card, and thus the complexity of the card management process becomes more serious.

The embodiments of the present application provide a card management method, a terminal device, a server, a system and a storage medium, which can avoid frequent downloading and deleting of personalization data, thereby simplifying the card management process and reducing the complexity of the card management process.

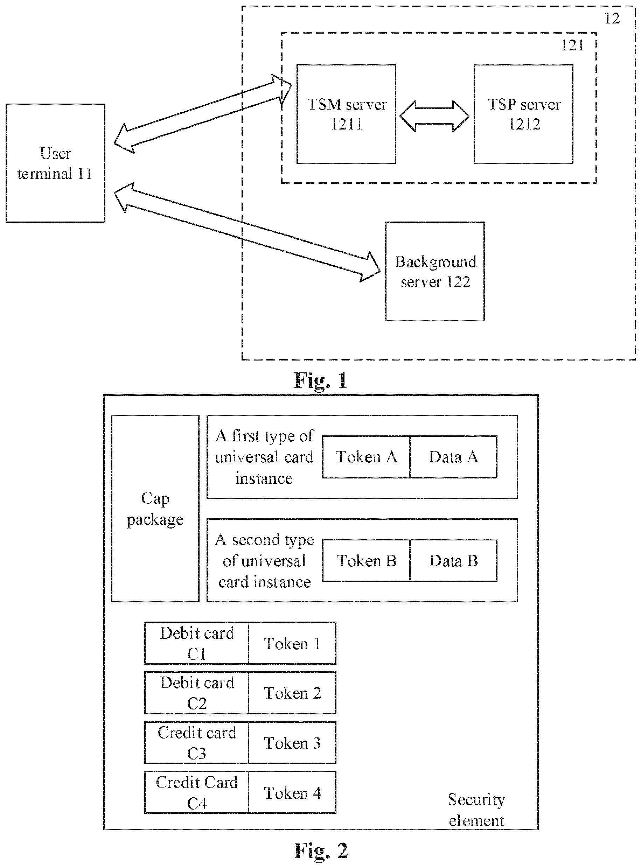

Fig. 1 is a schematic diagram of an example of an application scenario of a card management method provided by an embodiment of the present application. As shown in Fig. 1, a card management method provided by an embodiment of the present application may involve a user terminal 11 and a server 12, which is not limited herein.

The user terminal 11 may include a terminal device having a payment transaction function, such as a mobile phone, a tablet computer, a wearable device, various special-shaped cards, etc. which is not limited herein. An application for making a payment transaction may be installed in the user terminal 11. A user may achieve a payment transaction through the application.

The user terminal 11 may include a security element, wherein the security element is a security protection element provided in the user terminal 11, may include a specific hardware circuit, and may also include a built security environment, which is not limited herein. For example, the security element may include a Secure Element (SE), a Trusted Execution Environment (TEE), SE + TEE, a Host-based Card Emulation (HCE), etc. In an embodiment of the present application, a first type of universal card instance and a second type of universal card instance are stored in the security element. Specifically, the first type of universal card instance and the second type of universal card instance may be downloaded into the security element through an initialization operation in a process of performing card binding for the first time; the first type of universal card instance and the second type of universal card instance may also be preset in the security element before the user terminal leaves a factory, which is not limited herein.

The first type of universal card instance includes a first type of universal card identifier and a first type of universal personalization data. The first type of universal card instance is configured for a user terminal to perform transaction verification of a card with a card type being a first type. The first type of universal card identifier includes a universal identifier of a card with a card type being the first type. The first type of universal personalization data includes universal personalization data of a card with a card type being the first type. In the case of a payment transaction with a card whose card type is the first type, transaction verification calculation may be performed using the first type of universal card instance.

The second type of universal card instance includes a second type of universal card identifier and a second type of universal personalization data. The second type of universal card instance is configured for a user terminal to perform transaction verification of a card with a card type being a second type. The second type of universal card identifier includes a universal identifier of a card with a card type being the second type. The second type of universal personalization data includes universal personalization data of a card with a card type being the second type. In the case of a payment transaction with a card whose card type is the second type, transaction verification calculation may be performed using the second type of universal card instance.

A card transaction identifier of a card bound in the application may also be stored in the security element. Different cards have different card transaction identifiers. A card transaction identifier of a card may be distributed by a management server in a process of binding the card, and the user terminal receives the card transaction identifier of the card and stores same in the security element. By means of different card transaction identifiers, it is possible to distinguish between specific cards for performing payment transactions in a process of resource transfer, liquidation, etc. in the cards.

A format of the first type of universal card identifier and a format of the second type of universal card identifier may be different. For example, the first type of universal card identifier is a debit universal card identifier, and the debit universal card identifier may be a 19-bit identifier; the second type of universal card identifier is a credit universal card identifier, and the credit universal card identifier may be a 16-bit identifier. Formats of card transaction identifiers may also be different for cards of different card types. For example, a card transaction identifier of a debit card may be a 19-bit identifier, and a card transaction identifier of a credit card may be a 16-bit identifier.

In some examples, a program data package may also be stored in the security element. The program data package includes programs required for the security element to operate, which is not limited herein. The program data package may specifically be in the form of a Cap package. Such a program data package may be shared by internal operations on relevant information of a card, the first type of a universal card instance and the second type of a universal card instance, etc. in the security element, and after the program data package is stored in the security element, the program data package is not deleted any more, which avoids frequent downloading and deleting of the program data package. Specifically, the program data package may be downloaded into the security element through an initialization operation during the process of performing card binding for the first time; the program data package may also be preset in the security element before the user terminal leaves the factory, which is not limited herein.

For example, Fig. 2 is a schematic diagram of an example of contents stored in a security element of a user terminal provided by an embodiment of the present application. As shown in Fig. 2, the security element has stored therein a Cap package, a first type of universal card instance, a second type of universal card instance and a card transaction identifier of each bound bank card. A first type of card is a debit card in bank cards, a first type of universal card identifier may serve as a card identifier common to all debit cards in cards bound to an application, the first type of universal card identifier is denoted as Token A, and a first type of universal personalization data is denoted as Data A. A second type of card is a credit card in the bank cards, a second type of universal card identifier may serve as a card identifier common to all credit cards in cards bound to the application, the second type of universal card identifier is denoted as Token B, and a second type of universal personalization data is denoted as Data B. It is assumed that the application is bound with bank cards C1, C2, C3 and C4. The bank cards C1 and C2 are debit cards, and respective card transaction identifiers of the bank cards C1 and C2 are Token 1 and Token 2 respectively. The bank cards C3 and C4 are credit cards, and respective card transaction identifiers of the bank cards C3 and C4 are Token 3 and Token 4 respectively.

It should be noted that the number of card types is not limited herein; for example, in the case where there is a card of which the card type is a third type, a card of which the card type is a fourth type, etc., a third type of universal card instance, a fourth type of universal card instance, etc. may also be stored in the security element, and the third type of universal card instance, the fourth type of universal card instance, etc. are similar to the first type of universal card instance and the second type of universal card instance, and the function and use in the card management process may refer to the first type of universal card instance and the second type of universal card instance, which will not be described again herein.

The user terminal stores universal card instances, and does not need to download and store instances corresponding to each card, which can reduce an occupation rate of storage resources in the user terminal, reduce operating resources occupied by downloading, and optimize storage resources and operating resources.

The server 12 may include a management server 121 and a background server 122 of applications, which is not limited herein. In some examples, the management server 121 may include a Trusted Service Manager (TSM) server 1211 and a Telematics Service Provider (TSP) server 1212. The management server 121 and the background server 122 may interact with each other. The TSM server 1211 may also interact with the TSP server 1212.

The server 12 may store therein a first type of universal card instance and a second type of universal card instance corresponding to each user terminal interacting with the server 12. The first type of universal card instance and the second type of universal card instance in the security element of the user terminal are the same as the first type of universal card instance and the second type of universal card instance stored in the server. It should be noted that the first type of universal card instance and the second type of universal card instance corresponding to different user terminals are different, and may be uniformly allocated by the server.

The server 12 may store therein a mapping relationship of a security element identifier of a bound card of each terminal device interacting with the server 12, a matching universal card identifier and a card transaction identifier of the bound card. The matching universal card identifier is the first type of universal card identifier or the second type of universal card identifier that matches a card type of the bound card. In some examples, elements involved in the mapping relationship may also include other information in a CPLC corresponding to the security element identifier, which is not limited herein.

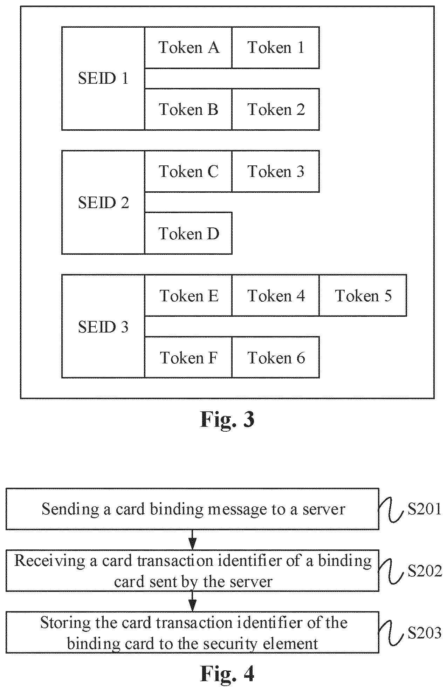

For example, it is assumed that the server 12 interact with three different user terminals UE1, UE2 and UE3, respectively. The security element identifier of the security element in the user terminal UE1 is SEID 1. A debit type universal card identifier corresponding to the user terminal UE1 is Token A, and a credit type universal card identifier corresponding to the user terminal UE1 is Token B. The user terminal UE1 correspondingly binds two bank cards, wherein the two bank cards include a debit card and a credit card, and a card transaction identifier of the debit card is Token 1, and a card transaction identifier of the credit card is Token 2. The security element identifier of the security element in the user terminal UE2 is SEID 2. A debit type universal card identifier corresponding to the user terminal UE2 is Token C, and a credit type universal card identifier corresponding to the user terminal UE2 is Token D. The user terminal UE2 correspondingly binds a bank card, wherein the bank card is a debit card, and a card transaction identifier of the debit card is Token 3. The security element identifier of the security element in the user terminal UE3 is SEID 3. A debit type universal card identifier corresponding to the user terminal UE3 is Token E, and a credit type universal card identifier corresponding to the user terminal UE3 is Token F. The user terminal UE3 correspondingly binds three bank cards, wherein the three bank cards include two debit cards and one credit card, card transaction identifiers of the debit cards are Token 4 and Token 5 respectively, and a card transaction identifier of the credit card is Token 6. Fig. 3 is a schematic diagram of an example of a mapping relationship stored in a server provided by an embodiment of the present application, and shows a mapping relationship of a security element identifier of a bound card of each terminal device described above, a matching universal card identifier and a card transaction identifier of the bound card.

In some examples, in order to facilitate interaction between the user terminal and the management server, a function control of the management server may be installed at the user terminal through which the user terminal may interact with the management server. For example, the user terminal may interact with the TSM server through the function control.

Hereinafter, a card management method, a user terminal, a server, a system and a storage medium provided by the present application will be described in detail.

A first aspect of the present application provides a card management method, which may be applied to a user terminal. Fig. 4 is a flowchart of an embodiment of a card management method provided in the first aspect of the present application. As shown in Fig. 4, the card management method may include steps S201 to S203.

In step S201, a card binding message is sent to a server.

In particular, a user terminal device may trigger sending of the card binding message in response to a user input to an application of the user terminal, which is not limited herein.

The card binding message includes a security element identifier and binding card authentication information. The security element identifier is configured to identify the security element. Security element identifiers of security elements in different user terminals are different. The security element identifier may be written into the security element through an initialization operation in the process of performing card binding for the first time; the security element identifier may also be preset into the security element before the user terminal leaves the factory.

The binding card authentication information includes card authentication information of a binding card. A card that the card binding message requests to bind is a binding card. The card authentication information may be configured to identify the card. For example, in the case where a card is a bank card, the card authentication information may specifically include a card number of the bank card, and may further include a password, a mobile phone number of a person to whom the card belongs, a card validity period, a credit card authentication password, etc., which is not limited herein. The card authentication information is different for different cards. The card authentication information may be obtained by a user input or scanning, which is not limited herein.

The server receives the card binding message, and may allocate a card transaction identifier for the binding card based on the card authentication information in the card binding message. The card transaction identifier is configured to identify the card, and is different from the card authentication information. The card transaction identifier and the card authentication information of the same card may both identify the card, however, since the card authentication information is sensitive information, in a process of performing a payment transaction, the transaction is performed via the card transaction identifier, so as to avoid privacy leakage of a user.

Under a condition that the server receives the card binding message, the server may further establish a first mapping relationship. The first mapping relationship includes a mapping relationship of a security element identifier, a first matching universal card identifier, and a card transaction identifier of a binding card. The first matching universal card identifier is a first type of universal card identifier or a second type of universal card identifier that matches a card type of the binding card. In the case where the card type of the binding card is a first type, the first matching universal card identifier of the binding card is the first type of universal card identifier. In the case where the card type of the binding card is a second type, the first matching universal card identifier of the binding card is the second type of universal card identifier.

In step S202, the card transaction identifier of the binding card sent by the server is received.

The card transaction identifier may be configured for the binding card to conduct a transaction.

In step S203, the card transaction identifier of the binding card is stored in the security element.

To ensure the security of the card transaction identifier, the card transaction identifier of the binding card is stored in the security element. Card transaction identifiers corresponding to respective bound cards are stored in the security element.

The first matching universal card instance stored in the security element of the user terminal may be configured for transaction verification of the binding card. The first matching universal card instance includes the first matching universal card identifier. That is, the first matching universal card instance is a first type of universal card instance or a second type of universal card instance matching the card type of the binding card.

In an embodiment of the present application, the first type of universal card instance and the second type of universal card instance are stored in the security element of the user terminal. By sending a card binding message to the server, the user terminal enables the server to allocate a card transaction identifier for a binding card, and establish a mapping relationship of a security element identifier, a first matching universal card identifier and the allocated card transaction identifier. The user terminal itself can use the first matching universal card instance corresponding to the binding card to perform transaction verification, and the server uses the determined first matching universal card instance to perform transaction verification. The first matching universal card instance is the first type of universal card instance or the second type of universal card instance that matches the card type of the binding card. Namely, transaction verification can be completed by using the first type of universal card instance or the second type of universal card instance. In the process of binding cards, the server does not need to allocate corresponding personalization data for each card, and thus does not need to download personalization data during each card binding process, so as to avoid frequently downloading and storing personalization data, thereby reducing the complexity of the card management process and simplifying the card management process, and also improving a speed of card binding and reducing the time taken for card binding.

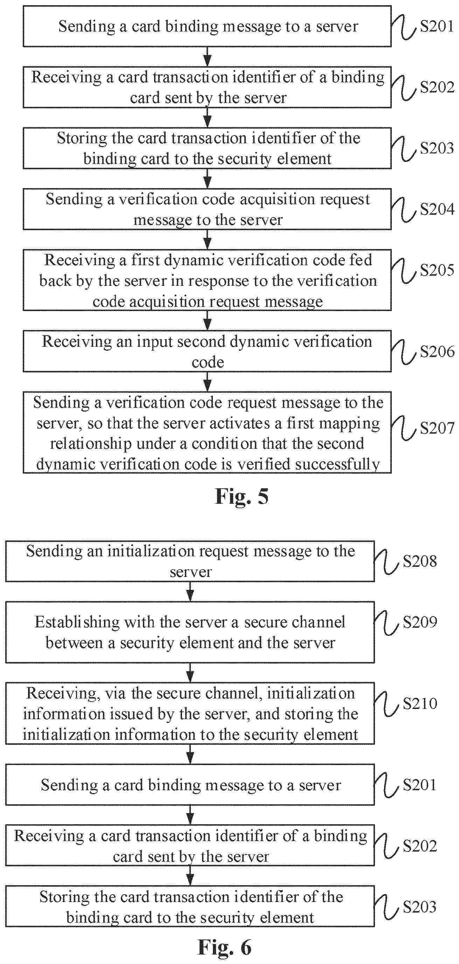

After the user terminal stores the card transaction identifier of the binding card in the security element, an application stage of card binding is completed, and the binding card also needs to be activated. Fig. 5 is a flowchart of another embodiment of a card management method provided in the first aspect of the present application. Fig. 5 differs from Fig. 4 in that the card management process shown in Fig. 5 may further include steps S204 to S207.

In step S204, a verification code acquisition request message is sent to the server.

After storing the card transaction identifier of the binding card, the user terminal may trigger a binding card activation process by sending a verification code acquisition request to the server. The verification code acquisition request message is configured for requesting a dynamic verification code.

In step S205, a first dynamic verification code fed back by the server in response to the verification code acquisition request message is received.

The server sends the first dynamic verification code to the user terminal in response to the verification code acquisition request message. The first dynamic verification code is configured for binding card activation. The first dynamic verification code may be fed back to the user terminal via a short message, an instant communication message, a call, etc. which is not limited herein. The user terminal may present the first dynamic verification code to the user by displaying a text image or emitting a sound, which is not limited herein.

In step S206, an input second dynamic verification code is received.

The second dynamic verification code may be a dynamic verification code input by a user, or a dynamic verification code acquired and input by an application according to the first dynamic verification code, which is not limited herein.

In step S207, a verification code request message is sent to the server to enable the server to activate the first mapping relationship if the second dynamic verification code is successfully verified.

The verification code request message includes the second dynamic verification code. In the case where the first dynamic verification code is identical to the second dynamic verification code, it is determined that the second dynamic verification code is successfully verified. The server activates the first mapping relationship in the case where the second dynamic verification code is verified successfully. In the case where the first mapping relationship is not activated, the binding card corresponding to the card transaction identifier in the first mapping relationship is in an unavailable state. In the case where the first mapping relationship is activated, the binding card corresponding to the card transaction identifier in the first mapping relationship is in an available state.

In some examples, in the case where the first mapping relationship is activated, the user terminal may set a life state of the binding card corresponding to the card transaction identifier in the first mapping relationship as an available state.

In the case where the user terminal performs card binding for the first time, the user terminal needs to perform an initialization process of card management. Fig. 6 is a flowchart of yet another embodiment of a card management method provided in the first aspect of the present application. Fig. 6 differs from Fig. 4 in that the card management method shown in Fig. 6 may further include steps S208 to S210.

In step S208, an initialization request message is sent to the server.

The initialization request message is configured to trigger the initialization process of card management.

In the case where the user terminal is further installed with a function control with the server, before the user terminal sends the initialization request message to the server, the user terminal may also invoke the function control by an application to perform initialization. In order to ensure the legality of initialization, before the user terminal sends initialization request information to the server, legality authentication of an application of card binding performed by the user terminal may be first performed between the server and the user terminal.

In step S209, a secure channel between the security element and the server is established with the server.

The secure channel may specifically be a GP channel, which is not limited herein. The security element in the user terminal may also mutually authenticate with the server, and after the authentication is successful, the server may interact with the security element via the secure channel. The secure channel can improve the security of the interaction between the user terminal and the server.

In step S210, initialization information issued by the server is received through the secure channel, and the initialization information is stored in the security element.

In this example, in the case where the initialization process is not performed, the security element in the user terminal is in an original state and has no security element identifier, and information such as a first type of universal card instance and a second type of universal card instance is not stored. During the initialization process, the initialization information transmitted over the secure channel may include, but is not limited to, the security element identifier, an encryption public key, the first type of universal card instance, and the second type of universal card instance. The encryption public key may encrypt data transmitted between the user terminal and the server in a subsequent card binding process.

In some examples, the initialization information may also include a region initial key for a transaction function region in the security element for storing data related to the card management process.

In some examples, a program data package may be preset in the security element of the user terminal before the user terminal leaves the factory.

In other examples, under a condition that the security element does not store a program data package, the initialization information may also include the program data package. Namely, in the initialization process of the card management, the program data package is downloaded into the security element of the user terminal. In the subsequent process, if no update is needed, the program data package does not need to be downloaded repeatedly.

In still other examples, under a condition that a program data package stored in the security element needs to be updated, the initialization information also includes an updated program data package. Namely, in the initialization process of the card management, the program data package in the security element may be updated, for example, the program data package before the update is replaced with the updated program data package.

It should be noted that the updating of the program data package stored in the security element may also be performed in other processes than the initialization process, which is not limited herein. Under a condition that the program data package stored in the security element needs to be updated, the user terminal may send an update request message to the server. The update request message is configured to request the updated program data package. The update request message may be initiated in the following case: the server detects that the program data package stored in the security element needs to be updated, notifies the user terminal to initiate the update request message, and requests the updated program data package. The update request message may also be initiated in the following case: the user terminal receives a user update input operation, initiates the update request message to the server, and requests an updated program data package.

Under a condition that a version of a program data package stored in the security element is lower than a latest version of a program data package stored in the server, it can be considered that the program data package stored in the security element needs to be updated. Alternatively, under a condition that the version of the program data package stored in the security element is lower than the latest version of the program data package stored in the server and is authorized by the user of the user terminal, it can be considered that the program data package stored in the security element needs to be updated.

In some examples, under a condition that it is not the first time for the user terminal to perform card binding, the server may encrypt the card transaction identifier of the binding card with an encryption private key paired with the encryption public key stored in the security element in the above-described initialization process. That is, the card transaction identifier of the binding card received by the user terminal may be a card transaction identifier encrypted using an encryption private key paired with the encryption public key. The encryption public key and the encryption private key are a pair of asymmetric keys. Transmitting the encrypted card transaction identifier between the user terminal and the server can ensure the security of data transmission on the basis that the secure channel is not established, and the secure channel does not need to be established, thereby saving resources occupied by and the time spent for establishing the secure channel.

Accordingly, after receiving the encrypted card transaction identifier, the user terminal may decrypt the card transaction identifier of the binding card using the encryption public key in the security element, and stores the decrypted card transaction identifier of the binding card in the security element.

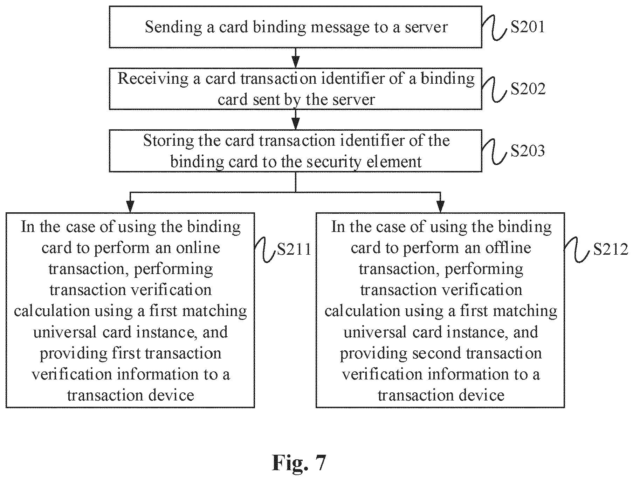

After the binding of the binding card is successful, the binding card may be used to perform transaction payment. Transactions may be divided into online transactions and offline transactions. An online transaction is a transaction in which a transaction device, such as a POS machine and a card swipe machine, having a transaction function is in an online state. An offline transaction is a transaction in which the transaction device is in an offline state. Fig. 7 is a flowchart of yet another embodiment of a card management method provided in the first aspect of the present application. Fig. 7 differs from Fig. 4 in that the card management method shown in Fig. 7 may further include step S211 and step S212.

In step S211, in the case of using the binding card to perform an online transaction, transaction verification calculation is performed using the first matching universal card instance, and first transaction verification information is provided to a transaction device so that the transaction device enables the server to perform transaction verification calculation using the first matching universal card instance corresponding to the card transaction identifier of the binding card based on the first mapping relationship.

In the case of performing a payment transaction using a binding card, the first transaction verification information includes the card transaction identifier of the binding card.

Under a condition that the user terminal and the transaction device perform a transaction in an online state, the user terminal and the server need to perform transaction verification. Specifically, the user terminal performs transaction verification calculation using the first matching universal card instance. The transaction device may send the received first transaction verification information to the server. The server may determine the first matching universal card identifier corresponding to the card transaction identifier of the binding card based on the stored first mapping relationship. Based on the first matching universal card identifier, the server may determine the first matching universal card instance corresponding to the card transaction identifier of the binding card, and perform transaction verification calculation using the first matching universal card instance. The first matching universal card instance includes the first matching universal card identifier, i.e. the first matching universal card instance is the first type of universal card instance or the second type of universal card instance matching the card type of the binding card. The transaction verification calculation may be specifically performed by a TSP server. In the case where a transaction verification calculation result of the user terminal is consistent with a transaction verification calculation result of the server, it is determined that the transaction verification is successful. For example, transaction verification between the user terminal and the server may specifically include, but is not limited to, authenticate request cryptogram (ARQC) verification.

Under a condition that the user terminal and the transaction device perform a payment transaction in an online state, first transaction verification information provided by the user terminal includes a card transaction identifier of a binding card configured for the transaction. The first transaction verification information may be transmitted to the server via the transaction device, and the server can identify a card used in this payment transaction based on the card transaction identifier, so that an acquirer can distinguish payment transactions performed by different cards.

In step S212, in the case of using the binding card to perform an offline transaction, transaction verification calculation is performed using the first matching universal card instance, and second transaction verification information is provided to the transaction device, so that the transaction device performs the transaction verification calculation using the first matching universal card instance.

The second transaction verification information includes the first matching universal card instance. In the case of an offline transaction, the user terminal and the transaction device need to perform offline data authentication (ODA). Specifically, the user terminal may perform transaction verification calculation using the first matching universal card instance, and the transaction device may perform transaction verification calculation using the first matching universal card instance in the second transaction verification information, and in the case where a transaction verification calculation result of the user terminal is consistent with a transaction verification calculation result of the server, it is determined that the offline data authentication is successful. For example, the transaction verification performed by the user terminal and the transaction device may specifically be transaction certificate (TC) verification, which is not limited herein.

It should be noted that in the case where the transaction device is connected to a network again, the transaction device will send the data of this offline transaction to the server. The data of the offline transaction may include transaction time, the first matching universal card identifier, etc., which is not limited herein.

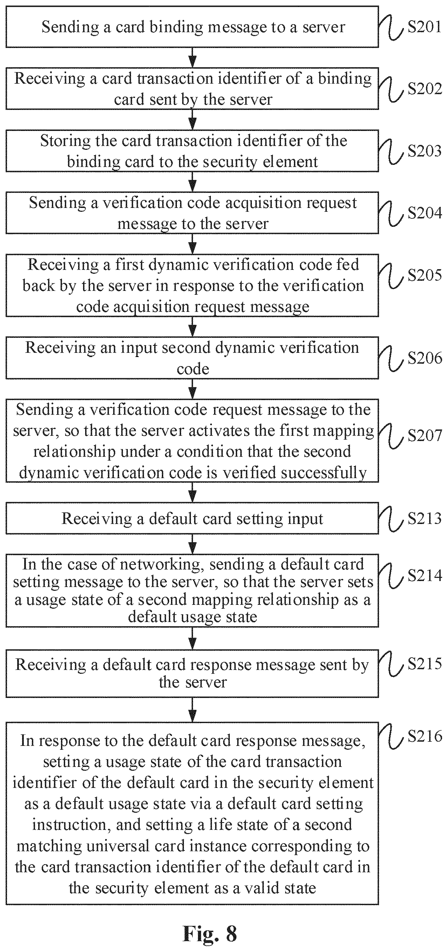

An application of the user terminal may bind a plurality of cards, and in the case of binding a plurality of cards, a default card is set in the bound plurality of cards, and the default card is used to perform a payment transaction. The default card can be changed. Fig. 8 is a flowchart of yet another embodiment of a card management method provided in the first aspect of the present application. Fig. 8 differs from Fig. 5 in that the card management method shown in Fig. 8 may further include steps S213 to S216.

In step S213, a default card setting input is received.

The default card setting input is configured to select the default card. The default card setting input may be a user input to the user terminal, which is not limited herein. The default card is a card for transaction payment by default.

In step S214, in the case of networking, a default card setting message is sent to the server to cause the server to set a usage state of the second mapping relationship as a default usage state.

The default card setting message includes a card transaction identifier of the default card. The second mapping relationship includes a mapping relationship of the security element identifier, a second matching universal card identifier, and the card transaction identifier of the default card. The second matching universal card identifier is the first type of universal card identifier or the second type of universal card identifier that matches a card type of the default card. In the case where the card type of the default card is a first type, the second matching universal card identifier of the default card is the first type of universal card identifier. In the case where the card type of the default card is a second type, the second matching universal card identifier of the default card is the second type of universal card identifier.

The server may find the second mapping relationship including the card transaction identifier of the default card based on the card transaction identifier of the default card. The server sets the usage state of the second mapping relationship as a default usage state, and accordingly, in the process of performing a payment transaction, the server will perform a payment transaction process by default using the security element identifier, the second matching universal card identifier and the card transaction identifier of the default card included in the second mapping relationship.

In step S215, a default card response message sent by the server is received.

In the case where the usage state of the second mapping relationship is set as the default usage state, the server sends a default card response message to the user terminal to notify the user terminal. The default card response message is configured for characterizing that the usage state of the second mapping relationship has been set to the default usage state.

In step S216, in response to the default card response message, a usage state of the card transaction identifier of the default card in the security element is set to a default usage state via a default card setting instruction, and a life state of the second matching universal card instance corresponding to the card transaction identifier of the default card in the security element is set to a valid state.

The second matching universal card instance is the first type of universal card instance or the second type of universal card instance that matches the card type of the default card. In the case where the card type of the default card is the first type, the second matching universal card instance of the default card is the first type of universal card instance. In the case where the card type of the default card is the second type, the second matching universal card instance of the default card is the second type of universal card instance.

After receiving the default card response message, the user terminal may determine that the usage state of the second mapping relationship in the server has been set as the default usage state, may correspondingly set the usage state of the card transaction identifier of the default card in the security element, and may set the life state of the second matching universal card instance, so as to ensure that a setting of the default card in the user terminal is consistent with a setting of the default card in the server.

The default card setting instruction is a control instruction sent by the user terminal to the security element. A specific form of the default card setting instruction is not limited herein. For example, the default card setting instruction may be an application protocol data unit (APDU) instruction, which is not limited herein.

It should be noted that default card setting instructions recognizable by the security element may include instructions in different version modes. After receiving the default card setting instructions, the security element may preferentially execute an instruction of a new version mode, and if the instruction is invalid, then execute an instruction of an old version. The instructions in the new and old version modes are independent from each other to ensure the compatibility of the execution of the instructions in the new and old version modes.

In some examples, a card used in performing a payment transaction is the default card. In the process of performing a payment transaction, transaction verification needs to be performed using the first type of universal card instance or the second type of universal card instance whose card type is the same as that of the default card. A life state of the first type of universal card instance or the second type of universal card instance whose card type is the same as that of the default card, namely, the second matching universal card instance, may be set as a valid state, and in the process of performing a payment transaction, the second matching universal card instance whose life state is set to be a valid state may be used by default to perform transaction verification.

In the case where transaction payment is performed using a certain bound card in the above-mentioned embodiment, the bound card is the default card. After using a certain bound card to perform an offline transaction, under a condition that the transaction device is connected to a network again, the transaction device will send data of this offline transaction to the server. The data of the offline transaction may include transaction time, the first matching universal card identifier, etc. In this case, the first matching universal card identifier is the same as the second matching universal card identifier, i.e. the first matching universal card instance is the same as the second matching universal card instance.

The server may query, using the transaction time, a card transaction identifier in a mapping relationship whose usage state is a default usage state at the transaction time, and use the card transaction identifier to perform processes such as settlement, namely, an amount of money for this transaction is transferred from a card corresponding to the card transaction identifier, so as to ensure the accuracy of the settlement of the offline transaction.

In still other embodiments, a bound card in an application of the user terminal may also be deleted as required, i.e. a card deletion process is performed. The user terminal may receive a card deletion message, and in response to the card deletion message, delete a card transaction identifier of a card to be deleted indicated by the card deletion message in the security element, or set a life state of the card transaction identifier of the card to be deleted indicated by the card deletion message as an invalid state.

The life state of the card transaction identifier being an invalid state may indicate that the card transaction identifier is in an unavailable state and cannot be invoked. In the case where the card needs to be bound again after being deleted, the life state of the card transaction identifier of the card may be set as a valid state, so as to quickly achieve card re-binding.

Note that, in this case, the security element deletes the card transaction identifier of the card to be deleted, or does not delete the card transaction identifier of the card to be deleted, and only sets the life state of the card transaction identifier of the card to be deleted as the invalid state. The first type of universal card instance and the second type of universal card instance are not deleted and the program data package is not deleted either. The first type of universal card instance and the second type of universal card instance may also be configured for transaction verification of other undeleted cards.

In some examples, the card deletion process may be initiated by a user through the user terminal. Specifically, a user may initiate the card deletion process through an operation on an application of the user terminal. The user terminal sends a card deletion request message to the server, and notifies the server to request to delete a card to be deleted. In response to the card deletion request message, the server may generate a card deletion message and send the card deletion message to the user terminal. In response to the card deletion message, the user terminal deletes the card transaction identifier of the card to be deleted in the security element or sets the life state of the card transaction identifier of the card to be deleted as an invalid state. The card deletion message may indicate a card to be deleted, e.g. the card deletion message includes a card transaction identifier of the card to be deleted. The user terminal may send a card deletion request message to the server, and the card deletion request message may include the card transaction identifier of the card to be deleted. In response to the card deletion request message, the server deletes a mapping relationship including the card transaction identifier of the card to be deleted. The server may also send a card deletion response message to the user terminal, and the card deletion response message is configured for characterizing that the mapping relationship including the card transaction identifier of the card to be deleted has been deleted in the server. The user terminal may send card deletion success prompt information so as to prompt the user that the card to be deleted is successfully deleted.

In other examples, the card deletion process may be initiated by a card organization through the server, for example, by a bank. The server receives a card deletion request message issued by the card organization. The card deletion request message is configured to indicate a card to be deleted, for example, the card deletion request message may include a card transaction identifier of the card to be deleted. In response to the card deletion request message, the server deletes a mapping relationship including the card transaction identifier of the card to be deleted and sends a card deletion message to the user terminal. The card deletion message is configured to indicate the card to be deleted, for example, the card deletion message may include the card transaction identifier of the card to be deleted. In response to the card deletion message, the user terminal deletes the card transaction identifier of the card to be deleted in the security element or sets a life state of the card transaction identifier of the card to be deleted as an invalid state. The user terminal may send a card deletion response message to the server to notify the server that the card to be deleted is successfully deleted in the security element.

Note that, in the case where the card to be deleted is the default card, it is necessary to designate another bound card as the default card and then delete the card to be deleted.

In the embodiment of the present application, in the case of deleting a card, the user terminal does not delete the first type of universal card instance and the second type of universal card instance, and does not delete a program data package either, thereby avoiding frequent deletion of personalization data and a program data package. Especially in the case of re-binding a previously deleted card, re-downloading of personalization data and program data package in the re-binding process can be avoided, thereby further reducing the complexity of the card binding process and the card deletion process.

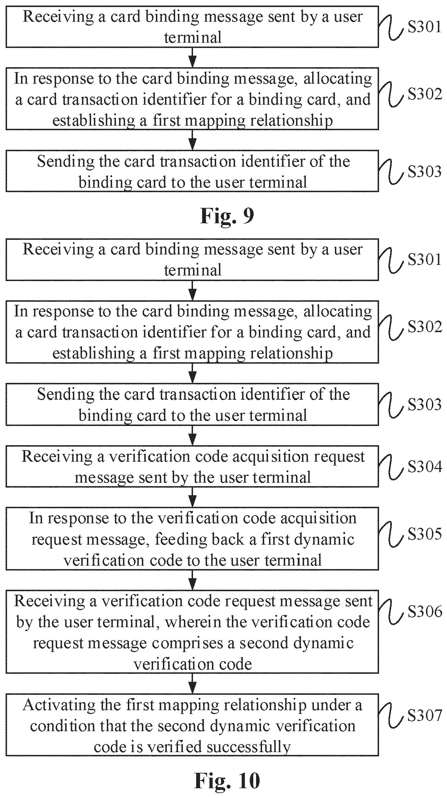

The second aspect of the present application also provides a card management method, which may be applied to a server. Fig. 9 is a flowchart of an embodiment of a card management method provided in the second aspect of the present application. As shown in Fig. 9, the card management method may include steps S301 to S303.

In step S301, a card binding message sent by a user terminal is received.

The card binding message includes a security element identifier and binding card authentication information. The security element identifier is configured to identify a security element in the user terminal. The binding card authentication information includes card authentication information of a binding card. The binding card is a card that needs to be bound with an application in the user terminal.

In step S302, in response to the card binding message, a card transaction identifier is allocated to the binding card and a first mapping relationship is established.

The server allocates different card transaction identifiers to different cards. Specifically, the server may allocate a card transaction identifier to the binding card based on the binding card authentication information in the card binding message.

The first mapping relationship includes a mapping relationship of the security element identifier, a first matching universal card identifier, and the card transaction identifier of the binding card. The first matching universal card identifier is a first type of universal card identifier or a second type of universal card identifier that matches a card type of the binding card. A first matching universal card instance is configured for transaction verification of the binding card. The first matching universal card instance includes the first matching universal card identifier.

In step S303, the card transaction identifier of the binding card is sent to the user terminal.

Specific contents in the above-described steps S301 to S303 may refer to relevant description in the above-described embodiments, which will not be described again herein.

In an embodiment of the present application, in response to a card binding message sent by a user terminal, a server allocates a card transaction identifier for a binding card, and establishes a first mapping relationship of a security element identifier, a first matching universal card identifier and the allocated card transaction identifier. The server sends the card transaction identifier allocated for the binding card to the user terminal so that the user terminal acquires the card transaction identifier. The first matching universal card instance is configured to perform transaction verification calculation of the binding card. With regard to cards with the same card type bound to an application of the user terminal, the user terminal and the server use the same matching universal card instance to perform transaction verification, and thus the server does not need to separately configure personalization data for transaction verification for each card, thereby avoiding the case where the server needs to transmit personalization data corresponding to a card to the user terminal every time the card is bound, reducing the complexity of the card management process and simplifying the card management process, and also improving a speed of card binding and reducing the time taken for by card binding.

After the user terminal stores the card transaction identifier of the binding card in the security element, an application stage of card binding is completed, and the binding card also needs to be activated. Fig. 10 is a flowchart of another embodiment of a card management method provided in the second aspect of the present application. Fig. 10 differs from Fig. 9 in that the card management method shown in Fig. 10 may further include steps S304 to S307.

In step S304, a verification code acquisition request message sent by the user terminal is received.

In step S305, a first dynamic verification code is fed back to the user terminal in response to the verification code acquisition request message.

In step S306, a verification code request message sent by the user terminal is received, wherein the verification code request message includes a second dynamic verification code.

In step S307, the first mapping relationship is activated if the second dynamic verification code is successfully verified.

Specific contents in the steps S304 to S307 may refer to relevant description in the above-described embodiments, which will not be described again herein.

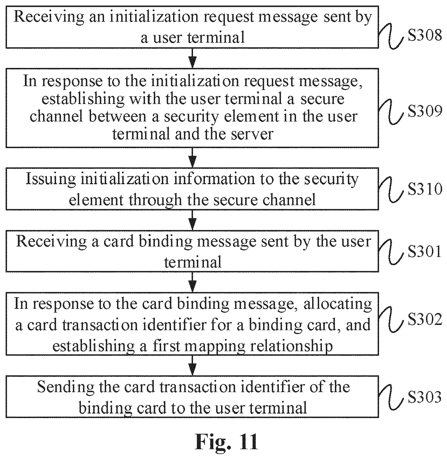

In the case where the user terminal performs card binding for the first time, the user terminal needs to perform an initialization process of card management. Fig. 11 is a flowchart of yet another embodiment of a card management method provided in the second aspect of the present application. Fig. 11 differs from Fig. 9 in that the card management method shown in Fig. 11 may further include steps S308 to S3 10.

In step S308, an initialization request message sent by the user terminal is received.

The initialization request message is configured to trigger the initialization process of card management.

In step S309, in response to the initialization request message, a secure channel between the security element in the user terminal and the server is established with the user terminal.

In step S310, initialization information is issued to the security element through the secure channel.

The initialization information includes the security element identifier, an encryption public key, a first type of universal card instance, and a second type of universal card instance.

The server may also record versions of a first type of universal personalization data and a second type of universal personalization data, and may update the first type of universal personalization data and the second type of universal personalization data stored in the security element of the user terminal under a condition that a new version appear for the first type of universal personalization data and the second type of universal personalization data.

Specific contents in the above-described steps S308 to S310 may refer to relevant description in the above-described embodiments, which will not be described again herein.

In some examples, the initialization information may also include a region initial key for a region in the security element for storing data related to the card management process.

In some examples, a program data package may be preset in the security element of the user terminal before the user terminal leaves a factory.

In other examples, under a condition that the security element does not store a program data package, the initialization information also includes a program data package.

In still other examples, under a condition that a program data package stored in the security element needs to be updated, the initialization information also includes an upgraded program data package.

In some examples, not limited to the initialization process, in other processes, the server may receive an update request message sent by the user terminal under a condition that a program data package stored in the security element needs to be updated. In response to the update request message, the server issues an updated program data package to the user terminal so as to realize the update of the program data package in the security element. Specific contents of the updating of the program data package may refer to relevant description in the above-described embodiments, which will not be described again herein.

In some examples, under a condition that it is not the first time for the server to receive the card binding message, the server may encrypt the card transaction identifier of the binding card using an encryption private key paired with the encryption public key, and send the encrypted card transaction identifier of the binding card to the user terminal.

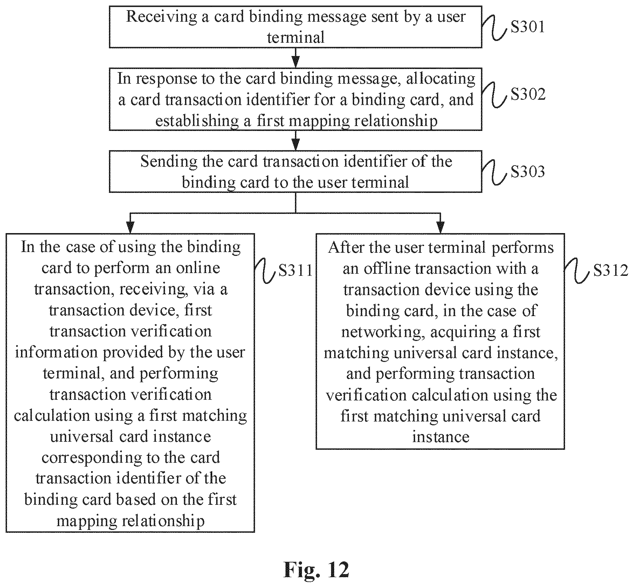

After the binding of the binding card is successful, the binding card may be used to perform transaction payment. Transactions may be divided into online transactions and offline transactions. An online transaction is a transaction in which a transaction device, such as a POS machine and a card swipe machine, having a transaction function is in an online state. An offline transaction is a transaction in which the transaction device is in an offline state. Fig. 12 is a flowchart of yet another embodiment of a card management method provided in the second aspect of the present application. Fig. 12 differs from Fig. 9 in that the card management method shown in Fig. 12 may further include step S311 and step S312.

In step S311, in the case of using the binding card to perform an online transaction, first transaction verification information provided by the user terminal is received via a transaction device, and based on a first mapping relationship, transaction verification calculation is performed using the first matching universal card instance corresponding to the card transaction identifier of the binding card.

The first transaction verification information includes the card transaction identifier of the binding card. Based on the first mapping relationship, the first matching universal card instance corresponding to the card transaction identifier of the binding card may be determined, and then transaction verification calculation is performed using the first matching universal card instance. The first matching universal card instance includes the first matching universal card identifier, i.e. the first matching universal card instance is the first type of universal card instance or the second type of universal card instance matching the card type of the binding card. In the case where a transaction verification calculation result of the user terminal is consistent with a transaction verification calculation result of the server, it is determined that the transaction verification is successful.

Under a condition that the user terminal and the transaction device perform a payment transaction in an online state, the first transaction verification information acquired by the server from the user terminal via the transaction device includes the card transaction identifier of the binding card configured for the transaction. The server can identify a card used in this payment transaction based on the card transaction identifier, so that an acquirer can distinguish payment transactions performed by different cards.

In step S312, after the user terminal performs an offline transaction with the transaction device using the binding card, in the case of networking, the first matching universal card instance is acquired, and transaction verification calculation is performed based on the first matching universal card instance.

Specifically, after an offline transaction occurs, if the transaction device is connected to a network again, the server may acquire the first matching universal card instance corresponding to the binding card, and perform transaction verification calculation using the first matching universal card instance.

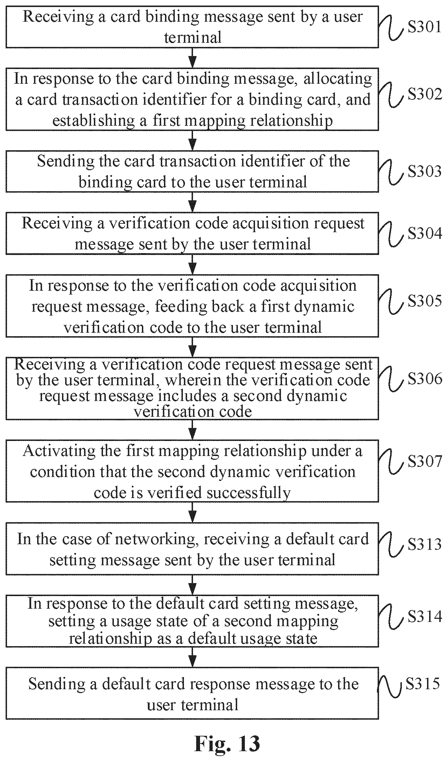

An application of the user terminal may bind a plurality of cards, and in the case of binding a plurality of cards, a default card is set in the bound plurality of cards, and the default card is used to perform a payment transaction. The default card may be changed. Fig. 13 is a flowchart of yet another embodiment of a card management method provided in the second aspect of the present application. Fig. 13 differs from Fig. 10 in that the card management method shown in Fig. 11 may further include steps S313 to S315.

In step S313, in the case of networking, a default card setting message sent by the user terminal is received.

The default card setting message includes a card transaction identifier of a selected default card.

In step S314, in response to the default card setting message, a usage state of a second mapping relationship is set to a default usage state.

The second mapping relationship includes a mapping relationship of the security element identifier, a second matching universal card identifier, and the card transaction identifier of the default card.

In step S315, a default card response message is sent to the user terminal.

The default card response message is configured to characterize that the usage state of the second mapping relationship has been set to the default usage state.

In the case where transaction payment is performed using a certain bound card in the above-mentioned embodiment, the bound card is the default card. After performing an offline transaction using a certain binding card, in the case where the transaction device is connected to the network again, the server will receive relevant information about the offline transaction sent by the transaction device, and the relevant information may include transaction time. The server may determine, based on the transaction time, the second mapping relationship whose usage state is a default usage state at the transaction time. Using the card transaction identifier of the default card in the second mapping relationship to perform settlement, namely, transferring a transaction amount out of an account of the default card, can avoid using a wrong account to perform settlement, thereby improving an accuracy of the offline transaction.

In a settlement process of the transaction payment process, the card transaction identifier of the default card in the second mapping relationship may be configured for settlement. A setting of the default card of the server and the user terminal may only be performed in an online state, so that the default card corresponding to the transaction time can be determined through the transaction time.

Specific contents in the above-described steps S313 to S315 may refer to relevant description in the above-described embodiments, which will not be described again herein.

In still other embodiments, a bound card in an application of the user terminal may also be deleted as required, i.e. a card deletion process is performed. The server may receive a card deletion request message, delete a third mapping relationship in response to the card deletion request message, or set a life state of the third mapping relationship as an invalid state.

The card deletion request message is configured to indicate a card to be deleted. The third mapping relationship includes a correspondence relationship of the security element identifier, a third matching universal card identifier and a card transaction identifier of the card to be deleted. The third matching universal card identifier is the first type of universal card identifier or the second type of universal card identifier that matches a card type of the card to be deleted. In the case where the card type of the card to be deleted is a first type, the third matching universal card identifier of the card to be deleted is the first type of universal card identifier. In the case where the card type of the card to be deleted is a second type, the third matching universal card identifier of the card to be deleted is the second type of universal card identifier.

The life state of the third mapping relationship being an invalid state may indicate that the third mapping relationship is in an unavailable state and cannot be invoked. In the case where the card needs to be bound again after being deleted, the life state of the third mapping relationship may be set as a valid state, so as to quickly achieve card re-binding.

The card deletion process may be initiated by a user via an application of the user terminal or initiated by a card organization, which is not limited herein, and reference may be made to relevant description in the above-mentioned embodiments for details, which will not be described again herein.

In order to further explain various processes involved in a card management method, the following description is given by taking an example in which a user terminal includes a security element, the user terminal is installed with an application and a function control, a server includes a background server, a TSM server and a TSP server of the application, and a card type includes a debit card and a credit card. The application may specifically be an electronic wallet application. The function control is a control corresponding to the TSM server.

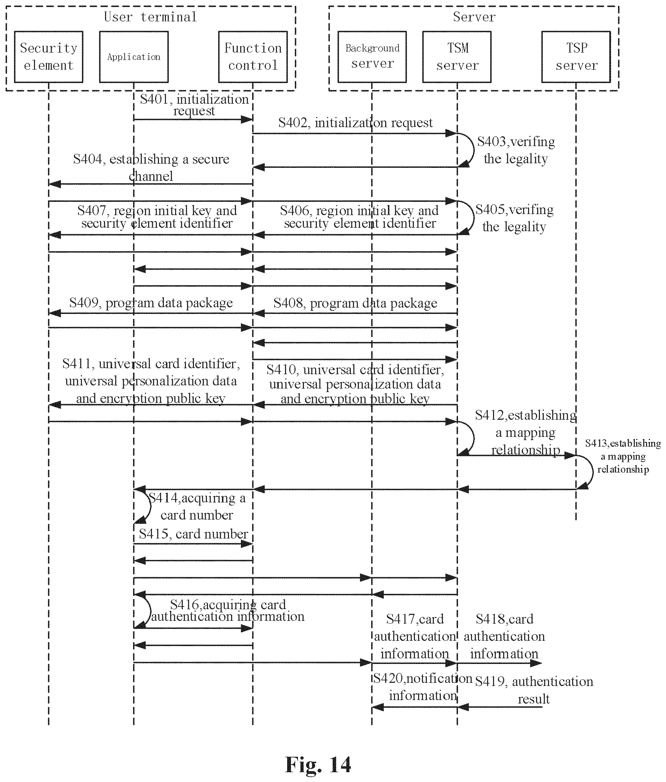

Fig. 14 is a flowchart of an example of an initialization process provided by an embodiment of the present application. Fig. 14 omits a flowchart illustration of some interactions, but these interactions are shown with arrows in Fig. 14. As shown in Fig. 14, the initialization process may include steps S401 to S420.

In step S401, an application initiates an initialization request to a function control.

In step S402, the function control sends the initialization request to a TSM server.

In step S403, the TSM server verifies the legality of the application.

The TSM server returns a response message to the function control to notify the function control to establish a secure channel.

In step S404, in the case where a legality verification result indicates that the legality verification of the application is successful, a secure channel between the function control and a security element is established, which is equivalent to establish a secure channel between the TSM server and the security element.

The security element returns a response message to the function control to notify the function control that the security channel is successfully established. The function control sends a verification request to the TSM server to cause the TSM server to verify the legality of a transaction function region in the security element.

In step S405, the TSM server verifies the legality of a transaction function region in the security element.

In step S406, in the case where a legality verification result indicates that the legality verification of the transaction function region is successful, a region initial key of the transaction function region and a security element identifier allocated for the security element are sent to the function control.

In step S407, the function control writes the region initial key and the security element identifier to the security element.

The security element returns a response message to the function control, and the function control returns the response message to the TSM server to notify the TSM server that the region initial key and the security element identifier have been written successfully.

The TSM server sends a first trigger message to the function control, and the function control sends the first trigger message to the application to notify the application that a program data package may be downloaded.

The application sends a download trigger message to the function control, and the function control sends the download trigger message to the TSM server. The download trigger message is configured to trigger the downloading of a program data package and a universal card identifier. The universal card identifier may include a universal debit card identifier and a universal credit card identifier. Optionally, the download trigger message may also trigger the downloading of universal personalization data. The universal personalization data may include debit card universal personalization data and credit card universal personalization data.

In step S408, the TSM server sends a program data package to the function control.

In step S409, the function control writes the program data package to the security element.

The security element returns a response message to the function control, and the function control returns the response message to the TSM server to notify the TSM server that the program data package has been written successfully.

The TSM server sends a second trigger message to the function control to trigger the function control to trigger the downloading of the universal card identifier, or to trigger the downloading of the universal card identifier and the universal personalization data. In this example, the downloading of the universal card identifier, the universal personalization data and an encryption public key is triggered for example. The function control sends a download request to the TSM server to request the downloading of the universal card identifier, the universal personalization data and the encryption public key.

In step S410, the TSM server sends a universal card identifier, universal personalization data and an encryption public key to the function control.

In step S411, the function control sends the universal card identifier, the universal personalization data and the encryption public key to the security element.

The security element returns a response message to the function control, and the function control returns the response message to the TSM server to notify the TSM server that the universal card identifier, the universal personalization data and the encryption public key have been written successfully.

In step S412, the TSM server establishes a mapping relationship of the security element identifier, the universal card identifier, and the universal personalization data.

The TSM server interacts with a TSP server to cause the TSP server to establish a mapping relationship of the security element identifier, the universal card identifier, and the universal personalization data.

In step S413, the TSP server establishes the mapping relationship of the security element identifier, the universal card identifier, and the universal personalization data.

The TSP server returns a response message to the TSM server; the TSM server returns the response message to the function control, and the function control returns the response message to the application, so as to notify the user terminal that the mapping relationship has been established.

In step S414, the application acquires a card number of a bank card.

In step S415, the application sends the card number to the function control.

The function control encrypts the card number and returns the encrypted card number to the application. The application sends the encrypted card number to a background server. The background server sends the encrypted card number to the TSM server. The TSM server determines a card type and card issuer based on the card number, and feeds back the card type and card issuer to the background server. The background server sends the card type and card issuer to the application.

In step S416, the application acquires, based on the card type, card authentication information, such as a validity period of a credit card, a credit card authentication password (i.e. CVN2), a mobile phone number of an owner, or such as a card password of a debit card, a mobile phone number of an owner, etc.

The application transmits the card authentication information to the function control. The function control encrypts the card authentication information, and returns the encrypted card authentication information to the application. The application sends the encrypted card authentication information to the background server.

In step S417, the background server sends the card authentication information to the TSM server.

In step S418, the TSM server sends the card authentication information to a card organization so that the card organization authenticates the card.

In step S419, the TSM server receives an authentication result sent by the card organization.

In step S420, in the case where the authentication result indicates that the authentication is successful, the TSM server sends notification information to the background server to notify the background server that a card binding process may start.

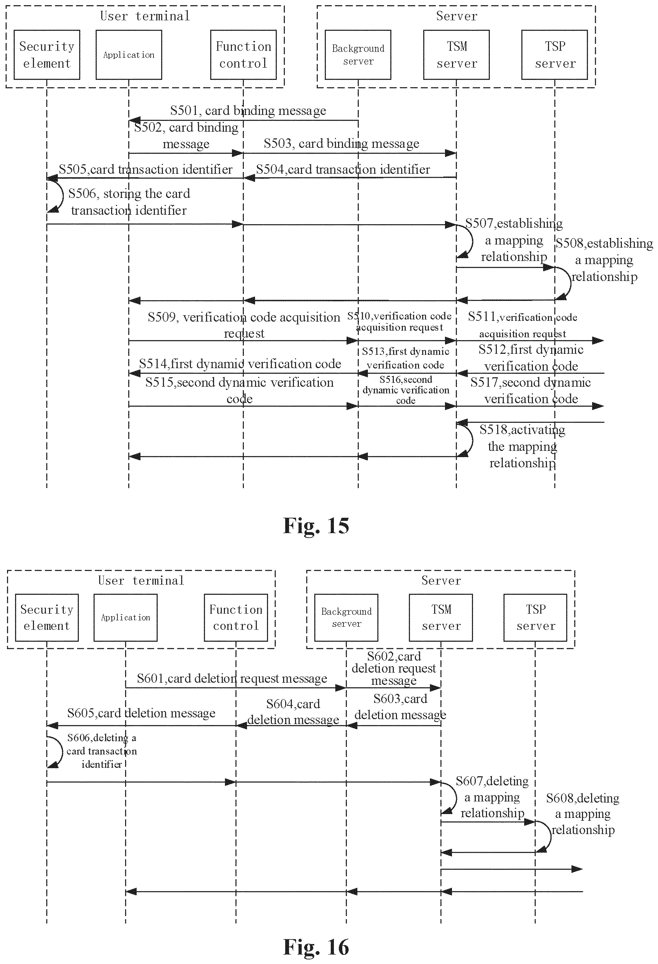

Fig. 15 is a flowchart of an example of a card binding process provided by an embodiment of the present application. Fig. 15 omits a flowchart illustration of some interactions, but these interactions are shown with arrows in Fig. 15. As shown in Fig. 15, the card binding process may include steps S501 to S518.

In step S501, the background server sends a card binding message to the application.

In step S502, the application sends the card binding message to the function control.

In step S503, the function control sends the card binding message to the TSM server.

In step S504, the TSM server sends to the function control, in response to the card binding message, a card transaction identifier encrypted with an encryption private key.

In step S505, the function control sends the encrypted card transaction identifier to the security element.

In step S506, the encrypted card transaction identifier is decrypted using an encryption public key and stored.

The security element sends a response message to the function control, and the function control sends the response message to the TSM server to notify the TSM server that the card transaction identifier has been written to the security element.

In step S507, the TSM server establishes a mapping relationship of a security element identifier, a first matching universal card identifier and the card transaction identifier.

The TSM server interacts with the TSP server to cause the TSP server to establish the mapping relationship of the security element identifier, the first matching universal card identifier, and the card transaction identifier.

In step S508, the TSP server establishes the mapping relationship of the security element identifier, the first matching universal card identifier and the card transaction identifier.

The TSP server sends a response message to the TSM server; the TSM server sends the response message to the function control, and the function control sends the response message to the application so as to notify the application that the mapping relationship has been established.

In step S509, the application sends a verification code acquisition request message to the background server.

In step S510, the background server sends the verification code acquisition request message to the TSM server.

In step S511, the TSM server sends the verification code acquisition request message to a card organization.

In step S512, the card organization sends a first dynamic verification code to the TSM server.

In step S513, the TSM server sends the first dynamic verification code to the background server.

In step S514, the background server sends the first dynamic verification code to the application.

In step S515, the application sends a second dynamic verification code to the background server.

In step S516, the background server sends the second dynamic verification code to the TSM server.

In step S517, the TSM server sends the second dynamic verification code to the card organization so that the card organization performs verification of dynamic verification code.

The card organization sends a verification response message to the TSM server.

In step S518, in the case where the verification response message indicates that the verification is successful, the TSM server activates the mapping relationship based on the verification result.

The TSM server sends the verification response message to the background server, and the background server sends the verification response message to the application.

Fig. 16 is a flowchart of an example of a card deletion process provided by an embodiment of the present application. Fig. 16 omits a flowchart illustration of some interactions, but these interactions are shown with arrows in Fig. 16. As shown in Fig. 16, the card deletion process may include steps S601 to S608.

In step S601, the application sends a card deletion request message to the background server in response to a user input.

In step S602, the background server sends the card deletion request message to the TSM server.

In step S603, the TSM server sends a card deletion message to the background server.

In step S604, the background server sends the card deletion message to the function control.

In step S605, the function control sends the card deletion message to the security element.

In step S606, the security element deletes a card transaction identifier of a card.

The security element sends a response message to the function control, and the function control sends the response message to the TSM server to notify the TSM server that the security element has deleted the card transaction identifier of the card.

In step S607, the TSM server deletes a mapping relationship including the card transaction identifier of the card.

The TSM server interacts with the TSP server to cause the TSP server to delete the mapping relationship that includes the card transaction identifier of the card.

In step S608, the TSP server deletes the mapping relationship including the card transaction identifier of the card.

The TSP server sends a response message to the TSM server to notify the TSM server that the TSP server has deleted the mapping relationship. The TSM server interacts with the card organization to cause the card organization to delete the mapping relationship that includes the card transaction identifier of the card. After deleting the mapping relationship including the card transaction identifier of the card, the card organization sends a response message to the TSM server; the TSM server sends the response message to the background server; and the background server sends the response message to the application so as to notify the user that the card deletion is successful.

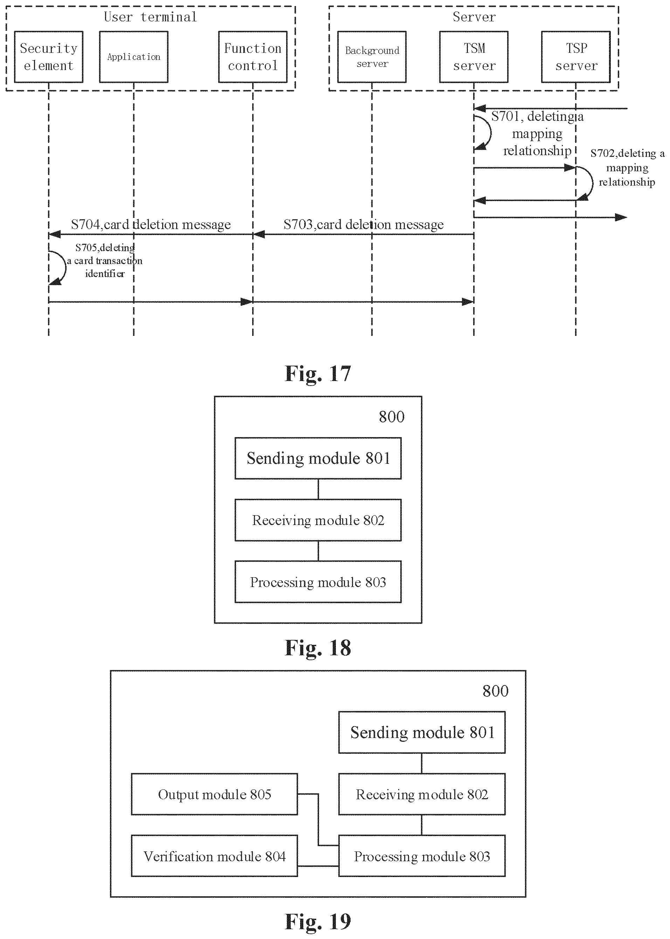

Fig. 17 is a flowchart of another example of a card deletion process provided by an embodiment of the present application. Fig. 17 omits a flowchart illustration of some interactions, but these interactions are shown with arrows in Fig. 17. As shown in Fig. 17, the card deletion process may include steps S701 to S705.

In step S701, the TSM server deletes, in response to a card deletion request message from a card organization, a mapping relationship including a card transaction identifier of a card which the card deletion request message indicates to delete.

The TSM server interacts with the TSP server to cause the TSP server to delete the mapping relationship that includes the card transaction identifier of the card.

In step S702, the TSP server deletes the mapping relationship including the card transaction identifier of the card.

The TSP server sends a response message to the TSM server to notify the TSM server that the TSP server has deleted the mapping relationship including the card transaction identifier of the card. The TSM server sends a response message to the card organization to notify the card organization that both the TSM server and the TSP server have deleted the mapping relationship including the card transaction identifier of the card.

In step S703, the TSM server sends a card deletion message to the function control.

In step S704, the function control sends the card deletion message to the security element.

In step S705, in response to the card deletion message, the security element deletes the card transaction identifier of the card.

The security element sends a response message to the function control, and the function control sends the response message to the TSM server to notify the TSM server that the security element has deleted the card transaction identifier of the card.

A third aspect of the present application provides a user terminal. The user terminal has a security element. The security element stores a first type of universal card instance and a second type of universal card instance. The first type of universal card instance includes a first type of universal card identifier and a first type of universal personalization data. The second type of universal card instance includes a second type of universal card identifier and a second type of universal personalization data. The first type of universal card instance is configured for the user terminal to perform transaction verification of a card with a card type being a first type. The second type of universal card instance is configured for the user terminal to perform transaction verification of a card with a card type being a second type.

Fig. 18 is a schematic structural diagram of an embodiment of a user terminal provided in the third aspect of the present application. As shown in Fig. 18, the user terminal 800 may include a sending module 801, a receiving module 802, and a processing module 803.

The sending module 801 may be configured to send a card binding message to a server to cause the server to allocate a card transaction identifier for the binding card and establish a first mapping relationship.

The card binding message includes a security element identifier and binding card authentication information. The binding card authentication information includes card authentication information of a binding card. The first mapping relationship includes a mapping relationship of the security element identifier, a first matching universal card identifier, and the card transaction identifier of the binding card. The first matching universal card identifier is a first type of universal card identifier or a second type of universal card identifier that matches a card type of the binding card.

The receiving module 802 may be configured to receive the card transaction identifier of the binding card sent by the server.

The processing module 803 may be configured to store the card transaction identifier of the binding card to a security element.

The first matching universal card instance is configured for transaction verification of the binding card. The first matching universal card instance includes the first matching universal card identifier.

In an embodiment of the present application, a first type of universal card instance and a second type of universal card instance are stored in the security element of the user terminal. By sending a card binding message to the server, the user terminal enables the server to allocate a card transaction identifier for a binding card, and establish a mapping relationship of a security element identifier, a first matching universal card identifier and the allocated card transaction identifier. The user terminal itself can use the first matching universal card instance corresponding to the binding card to perform transaction verification, and the server uses the determined first matching universal card instance to perform transaction verification. The first matching universal card instance is the first type of universal card instance or the second type of universal card instance that matches a card type of the binding card. Namely, transaction verification can be completed by using the first type of universal card instance or the second type of universal card instance. In the process of binding cards, the server does not need to allocate corresponding personalization data for each card, and thus does not need to download personalization data during each card binding process, so as to avoid frequently downloading and storing personalization data, thereby reducing the complexity of the card management process and simplifying the card management process, and also improving a speed of card binding and reducing the time taken for card binding.

In some examples, under a condition that it is the first time for the user terminal to perform card binding, the sending module 801 described above may further be configured to send an initialization request message to the server.

The receiving module 802 described above may further be configured for establishing with the server a secure channel between the security element and the server; and receiving, via the secure channel, initialization information issued by the server. The initialization information includes the security element identifier, an encryption public key, the first type of universal card instance, and the second type of universal card instance.

The processing module 803 may further be configured to store the initialization information to the security element.

In some examples, under a condition that it is not the first time for the user terminal to perform card binding, the received card transaction identifier of the binding card is a card transaction identifier encrypted with an encryption private key paired with the encryption public key.

The processing module 803 may be configured to decrypt the card transaction identifier of the binding card using the encryption public key, and store the decrypted card transaction identifier of the binding card in the security element.

In some examples, under a condition that the security element does not store a program data package, the initialization information further includes a program data package.

In other examples, under a condition that a program data package stored in the security element needs to be updated, the initialization information further includes an updated program data package.

In some examples, not limited to the initialization process, under a condition that a program data package stored in the security element needs to be updated, the sending module 801 described above may further be configured to send an update request message to the server. The update request message is configured to request an updated program data package.

In some examples, the sending module 801 may further be configured to send a verification code acquisition request message to the server.

The receiving module 802 may further be configured to receive a first dynamic verification code fed back by the server in response to the verification code acquisition request message.

The receiving module 802 may further be configured to receive an input second dynamic verification code.

The sending module 801 may further be configured to send a verification code request message to the server to enable the server to activate the first mapping relationship under a condition that the second dynamic verification code is verified successfully.

The verification code request message includes the second dynamic verification code.

Fig. 19 is a schematic structural diagram of another embodiment of a user terminal provided in the third aspect of the present application. Fig. 19 differs from Fig. 18 in that the user terminal 800 shown in Fig. 19 may further include a verification module 804 and an output module 805.

The verification module 804 may be configured for: in the case of using the binding card to perform an online transaction, performing transaction verification calculation using the first matching universal card instance.

The output module 805 may be configured for: in the case of using the binding card to perform an online transaction, providing first transaction verification information to a transaction device, so that the transaction device enables the server to perform the transaction verification calculation using the first matching universal card instance corresponding to the card transaction identifier of the binding card based on the first mapping relationship.

The first transaction verification information includes the card transaction identifier of the binding card. The first matching universal card instance includes the first matching universal card identifier.

In the case where the user terminal performs a payment transaction, the user terminal provides the first transaction verification information to the transaction device, so that the server acquires, from the transaction device, the card transaction identifier of the binding card performing the transaction, and determines the first matching universal card instance through the card transaction identifier.

Under a condition that the user terminal and the transaction device perform a payment transaction in an online state, first transaction verification information provided by the user terminal includes a card transaction identifier of a binding card configured for the transaction. The first transaction verification information may be transmitted to the server via the transaction device, and the server can identify a card used in this payment transaction based on the card transaction identifier, so that an acquirer can distinguish payment transactions performed by different cards.

In other examples, the verification module 804 may further be configured for: in the case of using the binding card to perform an offline transaction, performing transaction verification calculation using the first matching universal card instance.

The output module 805 may further be configured for providing second transaction verification information to a transaction device to enable the transaction device to perform transaction verification calculation using the first matching universal card instance.

The second transaction verification information includes the first matching universal card instance.

In some examples, the receiving module 802 may further be configured to receive a default card setting input.

The default card setting input is configured for selecting a default card.

The sending module 801 may further be configured to send a default card setting message to the server in case of networking to cause the server to set a usage state of a second mapping relationship as a default usage state.

The default card setting message includes a card transaction identifier of the default card. The second mapping relationship includes a mapping relationship of the security element identifier, a second matching universal card identifier, and the card transaction identifier of the default card. The second matching universal card identifier is the first type of universal card identifier or the second type of universal card identifier that matches the card type of the default card.

The receiving module 802 may further be configured to receive a default card response message sent by the server.

The default card response message is configured for characterizing that the usage state of the second mapping relationship has been set as the default usage state.

The processing module 803 may further be configured for: in response to the default card response message, setting a usage state of the card transaction identifier of the default card in the security element as a default usage state via a default card setting instruction, and setting a life state of a second matching universal card instance corresponding to the card transaction identifier of the default card in the security element as a valid state.

The second matching universal card instance is the first type of universal card instance or the second type of universal card instance that matches the card type of the default card.

It should be noted that in the case of performing transaction payment using a certain bound card, the bound card is the default card.

In some examples, the processing module 803 may further be configured for: in response to a received card deletion message, deleting a card transaction identifier of a card to be deleted in the security element or setting a life state of the card transaction identifier of the card to be deleted as an invalid state.

The card deletion message is configured for indicating the card to be deleted.

A fourth aspect of the present application provides a server. The server stores a first type of universal card instance and a second type of universal card instance of a user terminal. The first type of universal card instance includes a first type of universal card identifier and a first type of universal personalization data. The second type of universal card instance includes a second type of universal card identifier and a second type of universal personalization data. The first type of universal card instance is configured for the user terminal to perform transaction verification of a card with a card type being a first type. The second type of universal card instance is configured for the user terminal to perform transaction verification of a card with a card type being a second type.

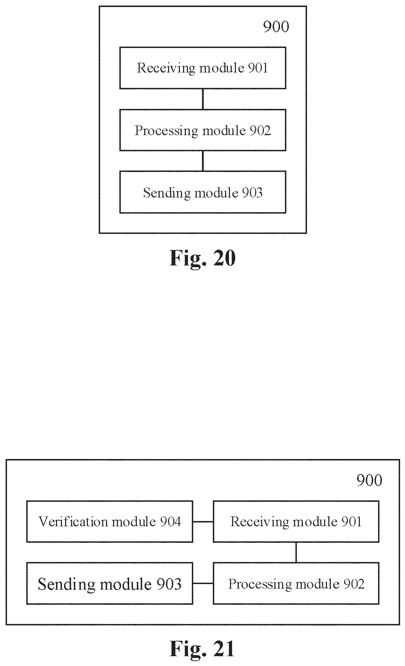

Fig. 20 is a schematic structural diagram of an embodiment of a server provided in the fourth aspect of the present application. As shown in Fig. 20, the server 900 may include a receiving module 901, a processing module 902, and a sending module 903.

The receiving module 901 may be configured for receiving a card binding message sent by a user terminal.

The card binding message includes a security element identifier and binding card authentication information. The binding card authentication information includes card authentication information of a binding card.

The processing module 902 may be configured to: in response to the card binding message, allocate a card transaction identifier for the binding card, and establish a first mapping relationship.

The first mapping relationship includes a mapping relationship of the security element identifier, a first matching universal card identifier, and the card transaction identifier of the binding card. The first matching universal card identifier is a first type of universal card identifier or a second type of universal card identifier that matches a card type of the binding card.

The sending module 903 may be configured to send the card transaction identifier of the binding card to the user terminal.

The first matching universal card instance is configured for transaction verification of the binding card. The first matching universal card instance includes the first matching universal card identifier.

In an embodiment of the present application, in response to a card binding message sent by a user terminal, a server allocates a card transaction identifier for a binding card, and establishes a first mapping relationship of a security element identifier, a first matching universal card identifier and the allocated card transaction identifier. The server sends the card transaction identifier allocated for the binding card to the user terminal so that the user terminal acquires the card transaction identifier. The server performs transaction verification calculation using the first matching universal card instance, wherein the first matching universal card instance includes the first matching universal card identifier. With regard to cards with the same card type bound to an application of the user terminal, the user terminal and the server use the same matching universal card instance to perform transaction verification, and thus the server does not need to separately configure personalization data for transaction verification for each card, thereby avoiding the case where the server needs to transmit personalization data corresponding to a card to the user terminal every time the card is bound, reducing the complexity of the card management process and simplifying the card management process, and also improving the speed of card binding and reducing the time taken for card binding.

In some examples, the receiving module 901 may further be configured to receive an initialization request message sent by the user terminal.

The sending module 903 may further be configured to: in response to the initialization request message, establish with the user terminal a secure channel between a security element in the user terminal and the server.

The sending module 903 may further be configured to issue initialization information to the security element through the secure channel.

The initialization information includes the security element identifier, an encryption public key, a first type of universal card instance, and a second type of universal card instance.

In some examples, under a condition that it is not the first time for the server to receive the card binding message, the processing module 902 may further be configured to encrypt the card transaction identifier of the binding card using an encryption private key paired with the encryption public key.

The sending module 903 may further be configured to send the encrypted card transaction identifier of the binding card to the user terminal.

In some examples, under a condition that the security element does not store a program data package, the initialization information further includes a program data package;

In other examples, under a condition that a program data package stored in the security element needs to be updated, the initialization information further includes an upgraded program data package.

In some examples, not limited to the initialization process, under a condition that a program data package stored in the security element needs to be updated, the receiving module described above may further be configured to receive an update request message sent by the user terminal.

The sending module 903 described above may further be configured to: in response to the update request message, issue an updated program data package to the user terminal.

In some examples, the receiving module 901 may further be configured to: receive a verification code acquisition request message sent by the user terminal.

The sending module 903 may further be configured to: in response to the verification code acquisition request message, feed back a first dynamic verification code to the user terminal.

The receiving module 901 may further be configured to receive a verification code request message sent by the user terminal.

The verification code request message includes a second dynamic verification code.

The processing module 902 may further be configured to activate the first mapping relationship under a condition that the second dynamic verification code is verified successfully.

Fig. 21 is a schematic structural diagram of another embodiment of a server provided in the fourth aspect of the present application. Fig. 21 differs from Fig. 20 in that the server 900 shown in Fig. 21 may also include a verification module 904.

The receiving module 901 described above may further be configured to: in the case of using the binding card to perform an online transaction, receive, via a transaction device, first transaction verification information provided by the user terminal.

The first transaction verification information includes the card transaction identifier of the binding card.

The verification module 904 may be configured to perform transaction verification calculation using the first matching universal card instance corresponding to the card transaction identifier of the binding card based on the first mapping relationship.

In the case of an online transaction, the server may receive the first transaction verification information provided by the user terminal device via the transaction device. The first transaction verification information includes the card transaction identifier of the binding card. The server may determine the first matching universal card instance in the first mapping relationship based on the card transaction identifier, so as to perform transaction verification calculation using the first matching universal card instance.

Furthermore, under a condition that the user terminal and the transaction device perform a payment transaction in an online state, the first transaction verification information acquired by the server from the user terminal via the transaction device includes the card transaction identifier of the binding card configured for the transaction. The server can identify a card used in this payment transaction based on the card transaction identifier, so that an acquirer can distinguish payment transactions performed by different cards.

In other examples, the processing module 902 may further be configured to: after the user terminal performs an offline transaction with the transaction device using the binding card, in the case of networking, acquire the first matching universal card instance, and perform transaction verification calculation using the first matching universal card instance.

In some examples, the receiving module 901 may further be configured to: in the case of networking, receive a default card setting message sent by the user terminal.

The default card setting message includes a card transaction identifier of a selected default card.

The processing module 902 may further be configured to: in response to the default card setting message, set a usage state of a second mapping relationship as a default usage state.

The second mapping relationship includes a mapping relationship of the security element identifier, a second matching universal card identifier and the card transaction identifier of the default card;

The sending module 903 may further be configured to send a default card response message to the user terminal, wherein the default card response message is configured for characterizing that the usage state of the second mapping relationship has been set as the default usage state.

In some examples, the verification module 904 may further be configured to: after the user terminal performs an offline transaction with the transaction device, in the case of networking, perform transaction verification calculation based on a second matching universal card instance.

The second matching universal card instance is the first type of universal card instance or the second type of universal card instance that matches a card type of the default card.

In some examples, in the case of performing transaction payment using a certain bound card, the bound card is the default card. The processing module 902 may further be configured to: after the user terminal performs an offline transaction with the transaction device, in the case of networking, determine the second mapping relationship of which the usage state is the default usage state; and perform settlement using the card transaction identifier of the default card in the second mapping relationship.

In some examples, the receiving module 901 may further be configured to receive a card deletion request message.

The card deletion request message is configured for indicating a card to be deleted.

The processing module 902 may further be configured to: in response to the card deletion request message, delete a third mapping relationship, or set a life state of the third mapping relationship as an invalid state.

The third mapping relationship includes a correspondence relationship of the security element identifier, a third matching universal card identifier and a card transaction identifier of the card to be deleted. The third matching universal card identifier is the first type of universal card identifier or the second type of universal card identifier that matches a card type of the card to be deleted.

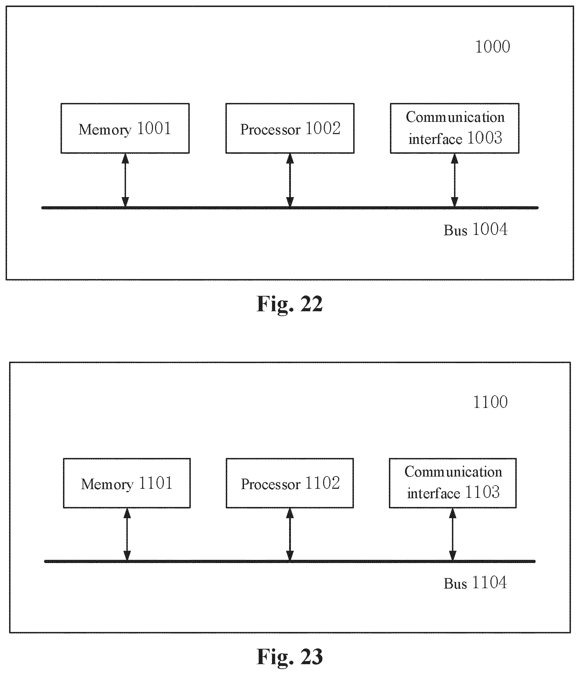

A fifth aspect of the present application provides a user terminal. Fig. 22 is a schematic structural diagram of an embodiment of a user terminal provided in the fifth aspect of the present application. As shown in Fig. 22, the user terminal 1000 includes a memory 1001, a processor 1002, and a computer program stored on the memory 1001 and executable on the processor 1002.

In one example, the processor 1002 described above may include a central processing unit (CPU), or an application specific integrated circuit (ASIC), or may be configured as one or more integrated circuits implementing the embodiments of the present application.

The memory 1001 may include a read-only memory (ROM), a random access memory (RAM), a magnetic disk storage media device, an optical storage media devices, a flash memory device, an electrical, optical, or other physical/tangible memory storage device. Thus, typically, the memory includes one or more tangible (non-transitory) computer-readable storage media (e.g. memory devices) encoded with software including computer-executable instructions, and the software, when executed (e.g. by one or more processors), is operable to perform operations described with reference to the card management method according to the first aspect of the present application.

The processor 1002 executes, by reading executable program code stored in the memory 1001, a computer program corresponding to the executable program code, so as to implement the card management method of the first aspect in the embodiment described above.

In one example, the user terminal 1000 may further include a communication interface 1003 and a bus 1004. As shown in Fig. 22, the memory 1001, the processor 1002, and the communication interface 1003 are connected and communicate with each other via the bus 1004.

The communication interface 1003 is mainly configured to implement communication between various modules, devices, units, and/or devices in embodiments of the present application. An input device and/or output device may also be accessible via the communication interface 1003.

The bus 1004 includes hardware, software, or both to couple components of the user terminal 1000 together with each other. By way of example and not limitation, the bus 1004 may include an accelerated graphics port (AGP) or other graphics bus, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB) bus, or other suitable bus, or a combination of two or more of the above. The bus 1004 may include one or more buses, as appropriate. Although embodiments of the present application describe and illustrate a particular bus, the present application contemplates any suitable bus or interconnect.

A sixth aspect of the present application provides a server. Fig. 23 is a schematic structural diagram of an embodiment of a server provided in the sixth aspect of the present application. As shown in Fig. 23, the server 1100 includes a memory 1101, a processor 1102, and a computer program stored on the memory 1101 and executable on the processor 1102.

In one example, the processor 1102 described above may include a central processing unit (CPU), or an application specific integrated circuit (ASIC), or may be configured as one or more integrated circuits implementing the embodiments of the present application.

The memory 1101 may include a read-only memory (ROM), a random access memory (RAM), a magnetic disk storage media device, an optical storage media devices, a flash memory device, an electrical, optical, or other physical/tangible memory storage device. Thus, typically, the memory includes one or more tangible (non-transitory) computer-readable storage media (e.g. memory devices) encoded with software including computer-executable instructions, and the software, when executed (e.g. by one or more processors), is operable to perform operations described with reference to the card management method according to the second aspect of the present application.

The processor 1102 executes, by reading executable program code stored in the memory 1101, a computer program corresponding to the executable program code, so as to implement the card management method of the second aspect in the embodiment described above.

In one example, the server 1100 may further include a communication interface 1103 and a bus 1104. As shown in Fig. 23, the memory 1101, the processor 1102, and the communication interface 1103 are connected and communicate with each other via the bus 1104.

The communication interface 1003 is mainly configured to implement communication between various modules, devices, units, and/or devices in embodiments of the present application. An input device and/or output device may also be accessible via the communication interface 1103.

The bus 1104 includes hardware, software, or both to couple components of the server 1100 together with each other. By way of example and not limitation, the bus 1004 may include an accelerated graphics port (AGP) or other graphics bus, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB) bus, or other suitable bus, or a combination of two or more of the above. The bus 1104 may include one or more buses, as appropriate. Although embodiments of the present application describe and illustrate a particular bus, the present application contemplates any suitable bus or interconnect.

A seventh aspect of the present application further provides a card management system. The card management system may include the user terminal and the server in the above-mentioned embodiments, and specific contents thereof may refer to relevant description in the above-mentioned embodiments, which will not be described again herein.

An eighth aspect of the present application further provides a computer storage medium having stored thereon a computer program that when executed by a processor by a processor, is operable to implement the card management method in the above-mentioned embodiments, and the same technical effect can be achieved, and in order to avoid repetition, the description thereof will not be repeated. The computer storage medium may include a non-transitory computer readable storage medium such as a read-only memory (ROM), a random access memory (RAM), a magnetic disk or an optical disk, etc. which is not limited herein.

It should be clear that, various embodiments in the specification are described in a progressive way, and the same or similar parts of various embodiments may be referred to each other, and each embodiment focuses on the differences from other embodiments. For the embodiments of the user terminal, the embodiments of the server, the embodiments of the system, the embodiments of the computer storage medium, related parts may refer to the description parts of the embodiments of methods. The present application is not limited to the specific steps and structures described above and shown in the drawings. Various changes, modifications and additions, or changes in the order of steps, can be made by those skilled in the art after they comprehend the spirit of the present application. In addition, for sake of brevity, a detailed description of the known technology is omitted herein.

Aspects of the present application are described above with reference to flowcharts and/or block diagrams of methods, apparatus (systems) and computer program products according to embodiments of the present application. It should be understood that, each block of the flowcharts and/or block diagrams, and a combination of blocks in the flowcharts and/or block diagrams, can be implemented by computer program instructions. These computer program instructions may be provided to a processor of a universal computer, a special-purpose computer, or other programmable data processing devices to produce a machine, such that these instructions executed via a processor of a computer or other programmable data processing devices enable implementation of a function/action specified in one or more blocks of the flowcharts and/or block diagrams. Such processors may be, but are not limited to, universal processors, special-purpose processors, special application processors, or field programmable logic circuits. It may also be understood that, each block in the block diagrams and/or flowcharts and a combination of blocks in the block diagrams and/or flowcharts may also be implemented by special-purpose hardware performing a specified function or action, or may be implemented by a combination of special-purpose hardware and computer instructions.

Those skilled in the art should understand that the above-mentioned embodiments are all illustrative and non-restrictive. Different technical features appearing in different embodiments can be combined to achieve beneficial effects. Those skilled in the art should be able to understand and implement other changed embodiments of the disclosed embodiments on the basis of studying the drawings, the description, and the claims. In the claims, the term "comprising" does not exclude other devices or steps, the quantifier "a" or "an" does not exclude a plurality, the terms "first" and "second" are configured to indicate names and not to indicate any particular order. Any reference signs in the claims should not be construed as limiting the protection scope. The functionality of multiple parts appearing in the claims may be implemented by a single hardware or software module. The presence of certain technical features in different dependent claims does not mean that these technical features cannot be combined to obtain beneficial effects.

## Claims

1. A card management method applied to a user terminal, wherein the user terminal comprises a security element, the security element stores a first type of universal card instance and a second type of universal card instance, the first type of universal card instance comprises a first type of universal card identifier and a first type of universal personalization data, the second type of universal card instance comprises a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type;
the method comprises:
sending a card binding message to a server, wherein the card binding message comprises a security element identifier of the security element and card authentication information of a binding card, so that the server allocates a card transaction identifier for the binding card, and establishes a first mapping relationship, wherein the first mapping relationship comprises a mapping relationship of the security element identifier, a first matching universal card identifier and the card transaction identifier of the binding card, and the first matching universal card identifier is the first type of universal card identifier or the second type of universal card identifier matching a card type of the binding card;
receiving the card transaction identifier of the binding card sent by the server; and
storing the card transaction identifier of the binding card to the security element, wherein a first matching universal card instance is configured for transaction verification of the binding card, the first matching universal card instance comprises the first matching universal card identifier, and the first matching universal card instance is the first type of universal card instance or the second type of universal card instance matching the card type of the binding card.

2. The method of claim 1, further comprising:
in the case of using the binding card to perform an online transaction, performing transaction verification calculation using the first matching universal card instance, and providing first transaction verification information to a transaction device, wherein the first transaction verification information comprises the card transaction identifier of the binding card, so that the transaction device enables the server to perform the transaction verification calculation using the first matching universal card instance corresponding to the card transaction identifier of the binding card based on the first mapping relationship.

3. The method of claim 1, further comprising:
in the case of using the binding card to perform an offline transaction, performing transaction verification calculation using the first matching universal card instance, and providing second transaction verification information to a transaction device, wherein the second transaction verification information comprises the first matching universal card instance, so that the transaction device performs the transaction verification calculation using the first matching universal card instance.

4. The method of claim 1, wherein under a condition that it is the first time for the user terminal to perform card binding, before the sending a card binding message to a server, the method further comprises:
sending an initialization request message to the server;
establishing with the server a secure channel between the security element and the server; and
receiving, via the secure channel, initialization information issued by the server, and storing the initialization information to the security element, wherein the initialization information comprises the security element identifier, an encryption public key, the first type of universal card instance and the second type of universal card instance.

5. The method of claim 4, wherein under a condition that it is not the first time for the user terminal to perform card binding, the received card transaction identifier of the binding card is a card transaction identifier encrypted with an encryption private key paired with the encryption public key,
the storing the card transaction identifier of the binding card to the security element comprises:
decrypting the card transaction identifier of the binding card using the encryption public key in the security element, and storing the decrypted card transaction identifier of the binding card.

6. The method of claim 4, wherein,
under a condition that the security element does not store a program data package, the initialization information further comprises a program data package;
under a condition that a program data package stored in the security element needs to be updated, the initialization information further comprises an upgraded program data package.

7. The method of claim 1, further comprising:
under a condition that a program data package stored in the security element needs to be updated, sending an update request message to the server, wherein the update request message is configured for requesting an updated program data package.

8. The method of claim 1, wherein after the storing the card transaction identifier of the binding card to the security element, the method further comprises:
sending a verification code acquisition request message to the server;
receiving a first dynamic verification code fed back by the server in response to the verification code acquisition request message;
receiving an input second dynamic verification code; and
sending a verification code request message to the server, wherein the verification code request message comprises the second dynamic verification code, so that the server activates the first mapping relationship under a condition that the second dynamic verification code is verified successfully.

9. The method of claim 1, further comprising:
receiving a default card setting input, wherein the default card setting input is configured for selecting a default card;
in the case of networking, sending a default card setting message to the server, wherein the default card setting message comprises a card transaction identifier of the default card, so that the server sets a usage state of a second mapping relationship as a default usage state, the second mapping relationship comprises a mapping relationship of the security element identifier, a second matching universal card identifier and the card transaction identifier of the default card, and the second matching universal card identifier is the first type of universal card identifier or the second type of universal card identifier matching a card type of the default card;
receiving a default card response message sent by the server, wherein the default card response message is configured for characterizing that the usage state of the second mapping relationship has been set as the default usage state;
in response to the default card response message, setting a usage state of the card transaction identifier of the default card in the security element as a default usage state via a default card setting instruction, and setting a life state of a second matching universal card instance corresponding to the card transaction identifier of the default card in the security element as a valid state, wherein the second matching universal card instance is the first type of universal card instance or the second type of universal card instance matching the card type of the default card.

10. The method of claim 1, further comprising:
in response to a received card deletion message, deleting a card transaction identifier of a card to be deleted in the security element or setting a life state of the card transaction identifier of the card to be deleted as an invalid state, wherein the card deletion message is configured for indicating the card to be deleted.

11. A card management method applied to a server, wherein the server stores a first type of universal card instance and a second type of universal card instance of a user terminal, the first type of universal card instance comprises a first type of universal card identifier and a first type of universal personalization data, the second type of universal card instance comprises a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type;
the method comprises:
receiving a card binding message sent by the user terminal, wherein the card binding message comprises a security element identifier and binding card authentication information, and the binding card authentication information comprises card authentication information of a binding card;
in response to the card binding message, allocating a card transaction identifier for the binding card, and establishing a first mapping relationship, wherein the first mapping relationship comprises a mapping relationship of the security element identifier, a first matching universal card identifier and the card transaction identifier of the binding card, the first matching universal card identifier is the first type of universal card identifier or the second type of universal card identifier matching a card type of the binding card, a first matching universal card instance is configured for transaction verification of the binding card, the first matching universal card instance comprises the first matching universal card identifier, and the first matching universal card instance is the first type of universal card instance or the second type of universal card instance matching the card type of the binding card; and
sending the card transaction identifier of the binding card to the user terminal.

12. The method of claim 11, further comprising:
in the case of using the binding card to perform an online transaction, receiving, via a transaction device, first transaction verification information provided by the user terminal, and performing transaction verification calculation using the first matching universal card instance corresponding to the card transaction identifier of the binding card based on the first mapping relationship, wherein the first transaction verification information comprises the card transaction identifier of the binding card.

13. The method of claim 11, further comprising:
after the user terminal performs an offline transaction with a transaction device using the binding card, in the case of networking, acquiring the first matching universal card instance, and performing transaction verification calculation using the first matching universal card instance.

14. The method of claim 11, before the receiving a card binding message sent by the user terminal, the method further comprises:
receiving an initialization request message sent by the user terminal;
in response to the initialization request message, establishing with the user terminal a secure channel between a security element in the user terminal and the server; and
issuing initialization information to the security element through the secure channel, wherein the initialization information comprises the security element identifier, an encryption public key, the first type of universal card instance and the second type of universal card instance.

15. The method of claim 14, wherein under a condition that it is not the first time for the server to receive the card binding message, the sending the card transaction identifier of the binding card to the user terminal comprises:
encrypting the card transaction identifier of the binding card using an encryption private key paired with the encryption public key; and
sending the encrypted card transaction identifier of the binding card to the user terminal.

16. The method of claim 14, wherein,
under a condition that the security element does not store a program data package, the initialization information further comprises a program data package;
under a condition that a program data package stored in the security element needs to be updated, the initialization information further comprises an updated program data package.

17. The method of claim 11, further comprising:
under a condition that a program data package stored in the security element needs to be updated, receiving an update request message sent by the user terminal; and
in response to the update request message, issuing an updated program data package to the user terminal.

18. The method of claim 11, wherein after the establishing a first mapping relationship, the method further comprises:
receiving a verification code acquisition request message sent by the user terminal;
in response to the verification code acquisition request message, feeding back a first dynamic verification code to the user terminal;
receiving a verification code request message sent by the user terminal, wherein the verification code request message comprises a second dynamic verification code; and
activating the first mapping relationship under a condition that the second dynamic verification code is verified successfully.

19. The method of claim 11, further comprising:
in the case of networking, receiving a default card setting message sent by the user terminal, wherein the default card setting message comprises a card transaction identifier of a selected default card;
in response to the default card setting message, setting a usage state of a second mapping relationship as a default usage state, wherein the second mapping relationship comprises a mapping relationship of the security element identifier, a second matching universal card identifier and the card transaction identifier of the default card; and
sending a default card response message to the user terminal, wherein the default card response message is configured for characterizing that the usage state of the second mapping relationship has been set as the default usage state.

20. The method of claim 19, further comprising:
after the user terminal performs an offline transaction with a transaction device, in the case of networking, determining the second mapping relationship of which the usage state is the default usage state; and
performing settlement using the card transaction identifier of the default card in the second mapping relationship.

21. The method of claim 11, further comprising:
receiving a card deletion request message, wherein the card deletion request message is configured for indicating a card to be deleted; and
in response to the card deletion request message, deleting a third mapping relationship, or setting a life state of the third mapping relationship as an invalid state, wherein the third mapping relationship comprises a correspondence relationship of the security element identifier, a third matching universal card identifier and a card transaction identifier of the card to be deleted, and the third matching universal card identifier is the first type of universal card identifier or the second type of universal card identifier matching a card type of the card to be deleted.

22. A user terminal having a security element, wherein the security element stores a first type of universal card instance and a second type of universal card instance, the first type of universal card instance comprises a first type of universal card identifier and a first type of universal personalization data, the second type of universal card instance comprises a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type;
the user terminal comprises:
a sending module configured to send a card binding message to a server, wherein the card binding message comprises a security element identifier and binding card authentication information comprising card authentication information of a binding card, so that the server allocates a card transaction identifier for the binding card, and establishes a first mapping relationship, wherein the first mapping relationship comprises a mapping relationship of the security element identifier, a first matching universal card identifier and the card transaction identifier of the binding card, the first matching universal card identifier is the first type of universal card identifier or the second type of universal card identifier matching a card type of the binding card, a first matching universal card instance is configured for transaction verification of the binding card, the first matching universal card instance comprises the first matching universal card identifier, and the first matching universal card instance is the first type of universal card instance or the second type of universal card instance matching the card type of the binding card;
a receiving module configured to receive the card transaction identifier of the binding card sent by the server; and
a processing module configured to store the card transaction identifier of the binding card to the security element.

23. A server storing a first type of universal card instance and a second type of universal card instance of a user terminal, wherein the first type of universal card instance comprises a first type of universal card identifier and a first type of universal personalization data, the second type of universal card instance comprises a second type of universal card identifier and a second type of universal personalization data, the first type of universal card instance is configured for the user terminal to perform transaction verification of a card with a card type being a first type, and the second type of universal card instance is configured for the user terminal to perform transaction verification of a card with a card type being a second type;
the server comprises:
a receiving module configured to receive a card binding message sent by the user terminal, wherein the card binding message comprises a security element identifier and binding card authentication information, and the binding card authentication information comprises card authentication information of a binding card;
a processing module configured to: in response to the card binding message, allocate a card transaction identifier for the binding card, and establish a first mapping relationship, wherein the first mapping relationship comprises a mapping relationship of the security element identifier, a first matching universal card identifier and the card transaction identifier of the binding card, the first matching universal card identifier is the first type of universal card identifier or the second type of universal card identifier matching a card type of the binding card, a first matching universal card instance is configured for transaction verification of the binding card, the first matching universal card instance comprises the first matching universal card identifier, and the first matching universal card instance is the first type of universal card instance or the second type of universal card instance matching the card type of the binding card; and
a sending module configured to send the card transaction identifier of the binding card to the user terminal.

24. A user terminal, comprising: a processor and a memory storing computer program instructions;
the processor implements the card management method of any one of claims 1 to 10 when executing the computer program instructions.

25. A server, comprising: a processor and a memory storing computer program instructions;
the processor implements the card management method of any one of claims 11 to 21 when executing the computer program instructions.

26. A card management system comprising the user terminal of claim 24 and the server of claim 25.

27. A computer storage medium having stored thereon computer program instructions that when executed by a processor, implement the card management method of any one of claims 1 to 21.
